(19) Europäisches Patentamt / European Patent Office / Office européen des brevets

(11) **EP 2 860 691 A2**

(12) **EUROPEAN PATENT APPLICATION**

(43) Date of publication:
**15.04.2015 Bulletin 2015/16**

(51) Int Cl.:
**G06T 3/40** *(2006.01)*

(21) Application number: **14180632.3**

(22) Date of filing: **12.08.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **11.10.2013 JP 2013214215** | (71) Applicant: **FUJITSU LIMITED**<br>**Kawasaki-shi**<br>**Kanagawa 211-8588 (JP)**<br><br>(72) Inventor: **Shimizu, Seiya**<br>**Kanagawa, 211-8588 (JP)**<br><br>(74) Representative: **Hoffmann Eitle**<br>**Patent- und Rechtsanwälte PartmbB**<br>**Arabellastraße 30**<br>**81925 München (DE)** |

(54) **Image processing apparatus, method and program**

(57) An image processing apparatus includes a first field-of-view converting unit configured to convert an image of a first camera, which is equipped in a vehicle and arranged to include a portion of a vehicle body in an image capturing range, into an image having an arbitrary field-of-view within a field-of-view of the first camera; a second field-of-view converting unit configured to convert a blind spot image, which is an image of a second camera capturing an image of a peripheral environment acting as a blind spot by the first camera, into the blind spot image having the same field-of-view as the field-of-view of the image obtained after the conversion by the first converting unit; and a compositing unit configured to compose a region corresponding to the blind spot image obtained by the second converting unit to the region of the vehicle body of the image obtained by the first converting unit.

FIG.1

**Description**

FIELD

The embodiments discussed herein are related to an image processing apparatus, an image processing method and a program.

BACKGROUND

When a driver is driving a vehicle, a blind spot, which is blocked by a vehicle body or the like and cannot be directly viewed by the driver, is present in the field of view of the driver. As a means for securing the visibility of the rear of the vehicle, a room mirror and a side mirror have been equipped in the vehicle within the blind spot.

In addition, in recent years, various kinds of devices, such as a rear camera and a front camera, have been developed to supplement the visibility of the blind spot (see, e.g., Patent Document 1). It is expected that CMS (Camera Monitor System) under standardization by ISO 16505, which is intended to display on a monitor an image obtained by capturing the situation of a vehicle rear side, will be spread as an alternative to the side mirror.

For the CMS, the range of field of view displayed on the monitor is set in accordance with the range of field of view of the side mirror. It is common that the side mirror is adjusted such that a portion of a vehicle body is included in the range of field of view of the side mirror to allow a driver to grasp a distance from the vehicle to a peripheral object or a positional relationship there between.

Since it is not possible for the driver to view the rear side of the vehicle through the side mirror, it is necessary for the driver to confirm the rear side of the vehicle through a room mirror or an image captured by a rear camera. That is, in order to confirm the blind spot, the driver needs to check a plurality of monitors or mirrors physically separated from each other, which results in a great increase in the moving distance of the driver's visual line.

In addition, when the blind spot is confirmed through the plurality of monitors or mirrors, it is difficult to grasp a correspondence relationship between objects displayed on the monitors or mirrors. This causes a problem in that confirming the peripheral environment while operating a vehicle needs skill and is not an easy task.

A related technique is disclosed in, for example, Japanese Laid-Open Patent Publication No. 2003-196645 A.

It is an object of the present invention to provide an image processing apparatus, an image processing method and a program, which are capable of displaying an image in the range of field of view blocked by a vehicle body by overlapping the image with a vehicle body portion causing a blind spot.

SUMMARY

Accordingly, it is an object in one aspect of the invention (embodiment) to provide an image processing apparatus which includes a first field-of-view converting unit configured to convert an image of a first camera, which is equipped in a vehicle and arranged to include a portion of a vehicle body in an image capturing range, into an image having an arbitrary field-of-view within a field-of-view of the first camera; a second field-of-view converting unit configured to convert a blind spot image, which is an image of a second camera capturing an image of a peripheral environment acting as a blind spot image by the first camera, into the blind spot image having the same field-of-view as the field-of-view of the image obtained after the conversion by the first converting unit; and a compositing unit configured to compose a region corresponding to the blind spot image obtained by the second converting unit to the region of the vehicle body of the image obtained by the first converting unit.

The object and advantages of the invention will be realized and attained by means of the elements and combinations particularly pointed out in the claims.

BRIEF DESCRIPTION OF DRAWINGS

FIG. 1 is a view illustrating a configuration example of an in-vehicle system according to Embodiment 1;
FIG. 2A and FIG. 2B are views for explaining a vehicle coordinate system;
FIG. 3 is a view for explaining a camera coordinate system;
FIG. 4 is a view illustrating an example of camera arrangement;
FIGs. 5A to FIG. 5E are views for explaining arrangement parameters of cameras;
FIG. 6 is a view for explaining a right virtual camera capturing an image of a right rear side field of view;
FIG. 7 is a view for explaining a method of calculating an incident light vector in a camera coordinate system of the right virtual camera when the virtual camera employs a perspective projection method as a projection method;

FIG. 8 is a view illustrating an example of the incident light vector in the camera coordinate system of the right virtual camera;

FIG. 9 is a view for explaining a method of specifying a pixel position from the incident light vector;

FIG. 10A is a view illustrating an example of a camera image of a right camera and FIG. 10B is a view illustrating an example of a reference vehicle body mask image of the right camera, which corresponds to the example of FIG. 10A;

FIG. 11 is a view illustrating an example of an image obtained as a result of field-of-view conversion for the reference vehicle body mask image illustrated in FIG. 10B;

FIG. 12 is a view for explaining field-of-view conversion from a rear camera to a right visual camera;

FIG. 13A is a view illustrating a configuration example of a projection surface formed by a road surface and a vertical plane placed at infinity and FIG. 13B is a view illustrating a configuration example of a projection surface formed by a road surface and a vertical plane placed at a distance calculated by a distance sensor;

FIG. 14 is a functional block diagram illustrating a configuration example of the in-vehicle device according to Embodiment 1;

FIG. 15 is an exemplary flow chart for explaining a flow of image compositing process according to Embodiment 1;

FIG. 16 is an exemplary flow chart for explaining a flow of a generating process of a transformation matrix according to Embodiment 1;

FIG. 17 is an exemplary flow chart for explaining a flow of a converting process of a mask image of a reference vehicle body according to Embodiment 1;

FIG. 18 is an exemplary flow chart for explaining a flow of a generating process of a first field-of-view conversion image according to Embodiment 1;

FIG. 19 is an exemplary flow chart for explaining a flow of a generating process of a second field-of-view conversion image according to Embodiment 1;

FIG. 20 is a view illustrating an example of a result of the image compositing process according to Embodiment 1;

FIG. 21 is a view illustrating an example of a result of the image compositing process when the process is applied to a vehicle front side field of view;

FIG. 22 is a functional block diagram illustrating a configuration example of an in-vehicle device according to Embodiment 2;

FIG. 23 is a view for explaining a method of generating a reference vehicle body mask image according to Embodiment 2;

FIG. 24 is a view illustrating an exemplary flow chart for explaining a flow of the reference vehicle body mask image generating process according to Embodiment 2;

FIG. 25 is a view for explaining a method of generating a reference vehicle body mask image according to Embodiment 3;

FIG. 26 is a view illustrating an exemplary flow diagram for explaining a flow of the reference vehicle body mask image generating process according to Embodiment 3; and

FIG. 27 is a view illustrating a hardware configuration example of an in-vehicle system 1 according to an embodiment.

## DESCRIPTION OF EMBODIMENTS

Hereinafter, some embodiments of the present invention will be described in detail with reference to the drawings.

(Embodiment 1)

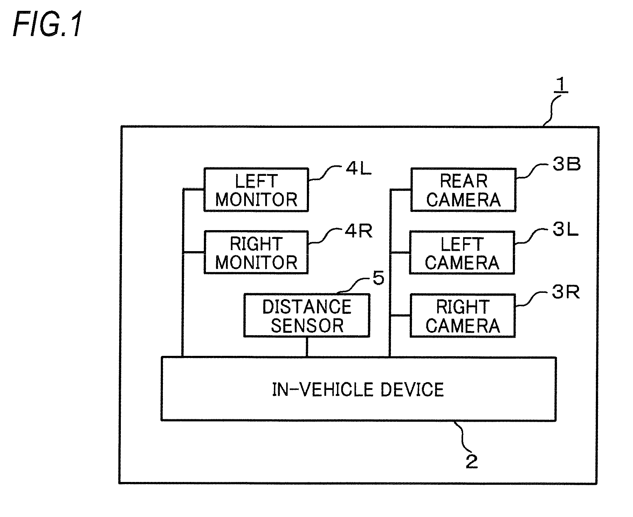

FIG. 1 is a view illustrating an exemplary configuration of an in-vehicle system 1 according to Embodiment 1. Referring to FIG. 1, the in-vehicle system 1 includes an in-vehicle device 2 which is an image processing apparatus, a plurality of cameras 3, one or more monitors 4 and a distance sensor 5. As illustrated in FIG. 1, the in-vehicle device 2 is connected with the plurality of cameras 3, the one or more monitors 4 and the distance sensor 5.

In the following description, Embodiment 1 will be described by way of an example of a blind spot which is present in the field of view of the rear side of a vehicle and blocked by the vehicle body.

The camera 3 is constituted by an imaging device such as, for example, CCD (Charge Coupled Device), or CMOS (Complementary Metal-Oxide Semiconductor), MOS (Metal-Oxide Semiconductor). The camera 3 captures images of the vicinity of the vehicle at the frequency of, for example, 30 fps (frame per second) and sequentially stores the captured images in an image buffer 11 which will be described later. An example of arrangement of the cameras 3 will be described later.

The monitor 4 may be a display device such as, for example, LCD (Liquid crystal Display), or organic EL (Electro-Luminescence) and displays images of the vicinity of the vehicle which were subjected to predetermined image processing, and various functional buttons on a display screen. As illustrated in FIG. 1, the monitors 4 may include, for example, a left monitor 4L and a right monitor 4R. In Embodiment 1, an image of the left rear side field-of-view $V_{LB}$ of the vehicle is displayed on the left monitor 4L corresponding to a left side mirror and an image of the right rear side field-of-view $V_{RB}$ of the vehicle is displayed on the right monitor 4R corresponding to a right side mirror.

The image of the left rear side field-of-view $V_{LB}$ and the image of the right rear side field-of-view $V_{RB}$ may be displayed in an arbitrary form. For example, one monitor 4 may be partitioned into a left section on which the image of the left rear side field-of-view $V_{LB}$ is displayed and a right section on which the image of the right rear side field-of-view $V_{RB}$ is displayed.

The distance sensor 5 may be, for example, an ultrasonic distance sensor, or a laser distance sensor. In the case of a ultrasonic sensor, the distance sensor 5 transmits an ultrasonic wave intermittently and receives a reflected wave from a peripheral object in order to detect the presence of the peripheral object and calculate a distance D from the distance sensor 5 to the peripheral object based on a relationship between the sound speed and time taken from the ultrasonic wave transmission to the reflected wave reception. The distance sensor 5 is disposed in the rear part of the vehicle, measures a distance D to an object in the rear of the vehicle at the frequency of, for example, 10 to 30 fps, and each time transmits the measured distance D to the in-vehicle device 2. A position of a vertical plane forming a projection surface S is determined based on the distance D.

Prior to describing detailed description on the in-vehicle device 2, an algorithm for Embodiment 1 will be described below along with a flow.

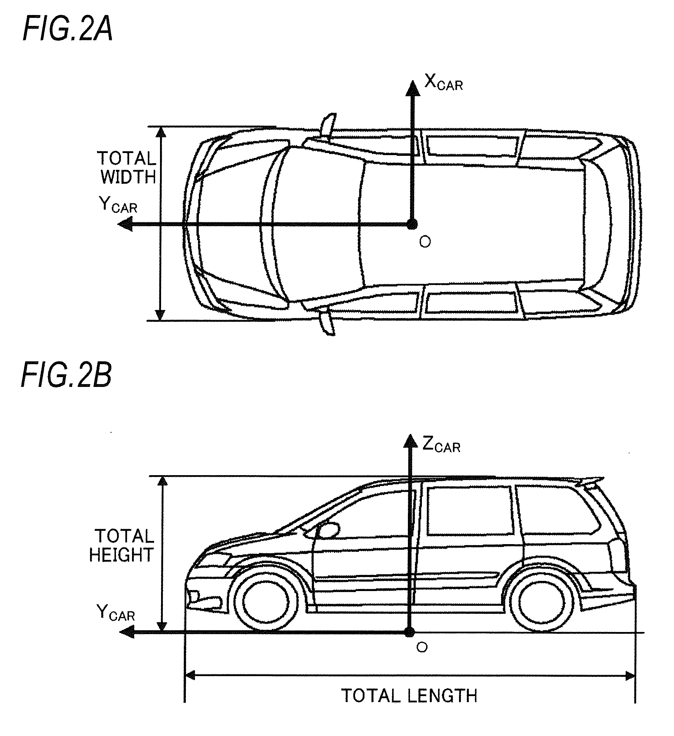

A vehicle coordinate system and a camera coordinate system will be described first with reference to FIG. 2 to FIG. 5.

FIG. 2A and FIG. 2B are views for explaining the vehicle coordinate system. The vehicle coordinate system is a vehicle-specific coordinate system expressing the position of a peripheral object as a coordinate on the basis of the vehicle. When the vehicle moves, the positional coordinate of the peripheral object varies. While the vehicle coordinate system may be set arbitrarily, in Embodiment 1 as illustrated in FIG. 2, it is assumed that the point at the center of the vehicle on a road surface in plan view is the origin O, the forward/backward direction of the vehicle is the Y axis (with the forward direction denoted by the plus sign), the left/right direction of the vehicle is the X axis (with the right direction denoted by the plus signal) and a vertical direction of the vehicle is the Z axis (with the upward direction denoted by the plus sign).

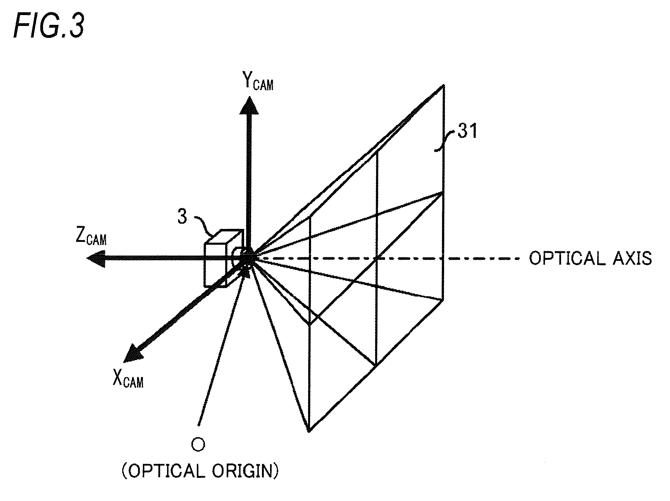

FIG. 3 is a view for explain the camera coordinate system. The camera coordinate system is a coordinate system specific to a camera 3 expressing the position of a peripheral object which corresponds to a subject as a coordinate on the basis of the camera 3. While the camera coordinate system may be set arbitrarily, in Embodiment 1, as illustrated in FIG. 3, it is assumed that an optical origin of the camera 3 is the origin O, the direction perpendicular to an optical axis in the horizontal direction is the X axis (with the right direction with respect to the optical axis denoted by the plus sign), the direction perpendicular to the optical axis in the vertical direction is the Y axis (with the upward direction denoted by the plus sign), and the optical axis is a Z axis (with the reverse direction to the optical axis direction denoted by the plus sign). A visual volume 31 represents an image-capturing range of the camera 3.

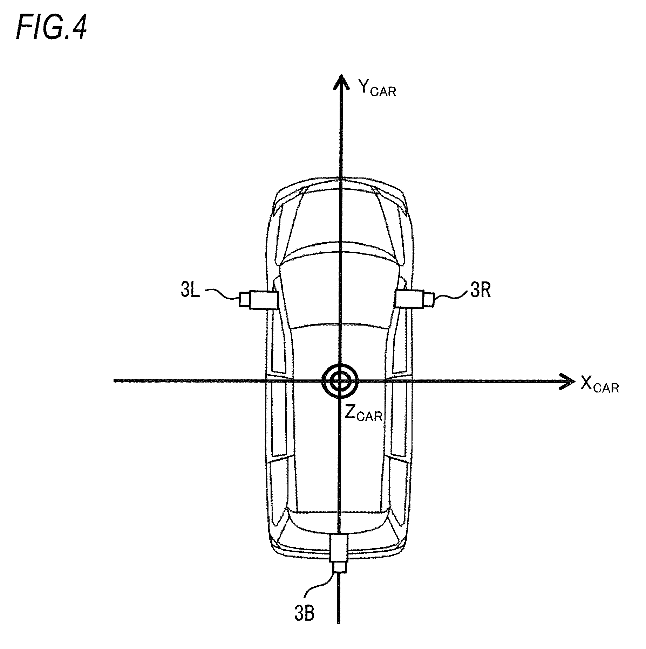

FIG. 4 is a view illustrating an example of arrangement of cameras 3 connected to the in-vehicle device 2. In the arrangement example illustrated in FIG. 4, a rear camera 3B having an imaging range for the rear side of the vehicle is disposed in the rear part of the vehicle, a right camera 3R having an imaging range for the right side of the vehicle is disposed in the periphery of a right door mirror and a left camera 3L having an imaging range for the left side of the vehicle is disposed in the periphery of a left door mirror. The surroundings of the vehicle except for the front side thereof may be imaged by the three cameras 3.

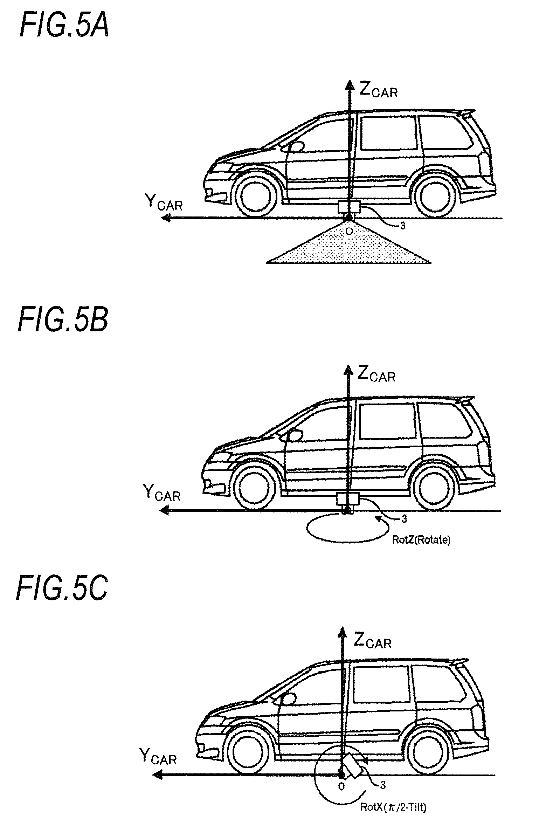

FIG. 5A to FIG. 5E are views for explaining the arrangement parameters of cameras 3. The arrangement parameters of the camera 3 include at least a three-dimensional coordinate (Tx, Ty, Tz) and arrangement angles Pan, Tilt and Rotate, which represent the arrangement position of the camera 3 in the vehicle coordinate system. The arrangement position of the camera 3 may be uniquely defined by these arrangement parameters.

The arrangement parameter Rotate represents that a camera 3 is rotated by an angle Rotate around the optical axis (X axis) (RotZ(Rotate)), as illustrated in FIG. 5B, with a state where the vehicle coordinate system coincides with the camera coordinate system is assumed as an initial state of the camera arrangement, as illustrated in FIG. 5A. The arrangement parameter Tilt represents that the camera 3 is rotated by an angle $\pi/2$-Tilt around the X axis (RotX($\pi/2$-Tilt)), as illustrated in FIG. 5C. That is, by such conversion, a depression angle Tilt defined such that it is zero in the horizontal direction and has the plus sign in a looking-down direction is converted into an elevation angle from a right down direction.

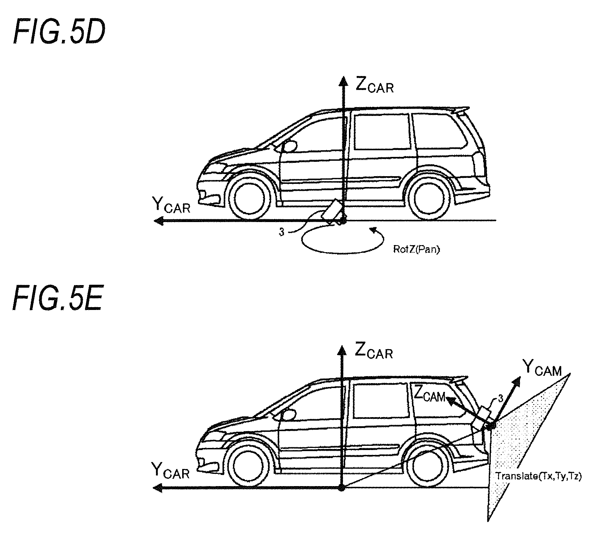

The arrangement parameter Pan represents that the camera 3 is swung in left or right side by an angle Pan around the Z axis (RotZ(Pan)), as illustrated in FIG. 5D. The three-dimensional coordinate (Tx, Ty, Tz) of the arrangement parameters represents that the camera 3 enters into the arrangement state by adjusting an arrangement angle of the camera 3 according to the arrangement angles Pan, Tilt and Rotate and then translating the camera 3 to the three-dimensional coordinate (Tx, Ty, Tz) (Translate(Tx, Ty, Tz)), as illustrated in FIG. 5E.

The arrangement parameters define the arrangement position of the camera 3 uniquely and also define the coordinate transformation between the vehicle coordinate system and the camera coordinate system. From the relationship between FIGS. 5A to 5E, a coordinate transformation matrix $M_{CAR \to CAM}$ from the vehicle coordinate system into the camera coordinate system may be expressed by the following equation (1).

$$M_{CAR \to CAM} = \begin{pmatrix} M_{11} & M_{12} & M_{13} & -M_{11}Tx - M_{12}Ty - M_{13}Tz \\ M_{21} & M_{22} & M_{23} & -M_{21}Tx - M_{22}Ty - M_{23}Tz \\ M_{31} & M_{32} & M_{33} & -M_{31}Tx - M_{32}Ty - M_{33}Tz \\ 0 & 0 & 0 & 1 \end{pmatrix} \quad \cdots\cdots(1)$$

Where, when cp = cos(Pan), sp = sin(Pan), ct = cos(Tilt), st = sin(Tilt), cr = cos(Rotate) and sr = sin(Rotate),

$$M11 = cr \times cp - sr \times st \times sp$$

$$M12 = cr \times sp + sr \times st \times cp$$

$$M13 = sr \times ct$$

$$M21 = -sr \times cp - cr \times st \times sp$$

$$M22 = -sr \times sp + cr \times st \times cp$$

$$M23 = cr \times ct$$

$$M31 = ct \times sp$$

$$M32 = -ct \times cp$$

$$M33 = st.$$

In addition, a vector transformation matrix $P_{CAR \to CAM}$ from the vehicle coordinate system into the camera coordinate system may be expressed by the following equation (2).

$$P_{CAR \to CAM} = \begin{pmatrix} M_{11} & M_{12} & M_{13} & 0 \\ M_{21} & M_{22} & M_{23} & 0 \\ M_{31} & M_{32} & M_{33} & 0 \\ 0 & 0 & 0 & 1 \end{pmatrix} \quad \cdots\cdots (2)$$

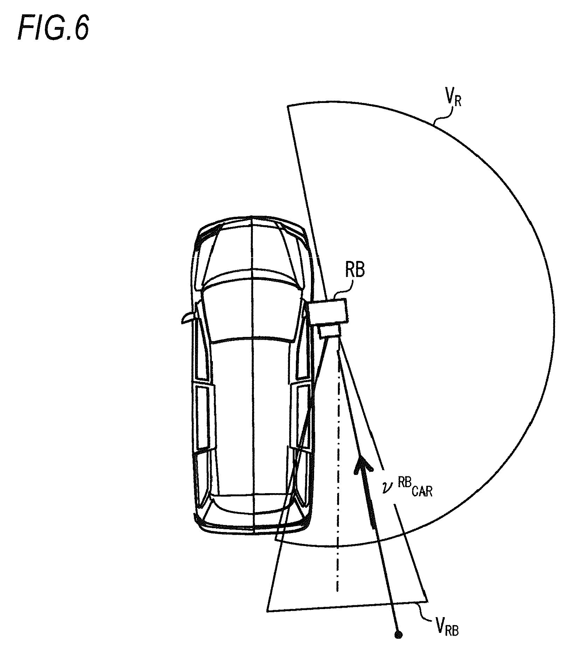

Next, a virtual camera which captures the rear side field-of-view of the vehicle will be described. Although there exist two field-of-views, that is, the left and right rear side field-of-views of the vehicle, since the processes therefor are the same, a right visual camera RB imaging the right rear side field-of-view $V_{RB}$ of the vehicle will be described as illustrated in FIG. 6. FIG. 6 is a view for explaining the right visual camera RB imaging the right rear side field-of-view $V_{RB}$ of the vehicle. In the example of FIG. 6, a lens of the right camera 3R is a wide-angle lens capable of imaging a wide range such as, for example, a fisheye lens, but may be a so-called standard lens.

The right virtual camera RB has arrangement parameters and may implement a specific field-of-view by specifying an arrangement parameter, a horizontal field angle $A_H$ and a projection method (for example, perspective projection, cylindrical projection or the like). The arrangement parameter (arrangement angle) and the horizontal field angle $A_H$ of the right virtual camera RB may be dynamically changed, for example, according to the contents of vehicle manipulation by a driver or by the change in settings by the driver through an operation unit 20 (which will be described later).

In Embodiment 1, the right virtual camera RB has the same arrangement position as that of the right camera 3R, as illustrated in FIG. 6, and a projection method is perspective projection without considering any distortion (lens distortion).

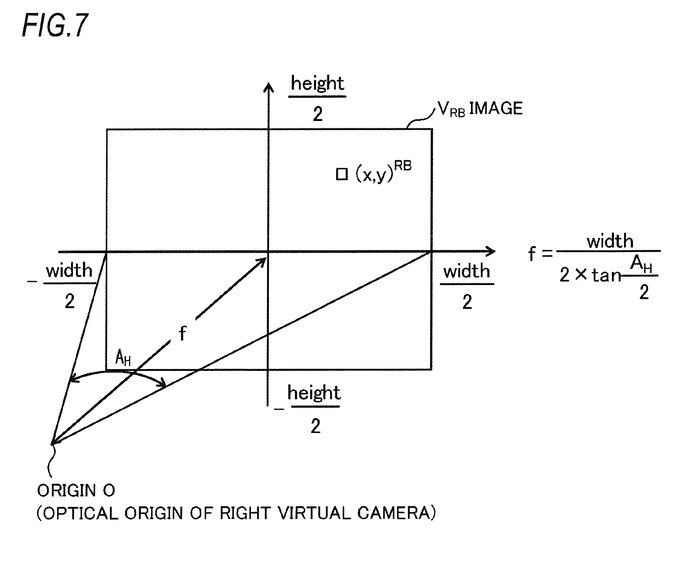

Next, under such presumptions, a first field-of-view converting process for converting a camera image of the right camera 3R into an image of the right rear side field-of-view VRB will be described with reference to FIGS. 7 to 9.

In this case, as illustrated in FIG. 7, an incident light vector $V_{CAM}^{RB}$ in a camera coordinate system of the right virtual camera RB may be calculated from a coordinate $(x, y)^{RB}$ at any point on the image of the right rear side field-of-view $V_{RB}$ imaged by the right virtual camera RB according to the following equations (3.1) and (3.2). FIG. 7 is a view for explaining a method of calculating the incident light vector $V_{CAM}^{RB}$ in the camera coordinate system of the right virtual camera RB when the projection method of the virtual camera is the perspective projection.

$$V_{CAM}^{RB} = \begin{pmatrix} x \\ y \\ -f \end{pmatrix} \quad \cdots\cdots (3.1)$$

$$f = \frac{width}{2 \times \tan \dfrac{A_H}{2}} \quad \cdots\cdots (3.2)$$

In the equation (3.2), "f" represents a distance between the origin O of the camera coordinate system of the right virtual camera RB and the origin O of an image coordinate system of the right rear side field-of-view $V_{RB}$, "width" represents the number of horizontal pixels of the image of the right rear side field-of-view $V_{RB}$, and $A_H$ represents a horizontal field angle of the right virtual camera RB. In this case, since a relationship of 1: tan(AH/2) = f: (width/2) is established, "f" may be expressed by the equation (3.2).

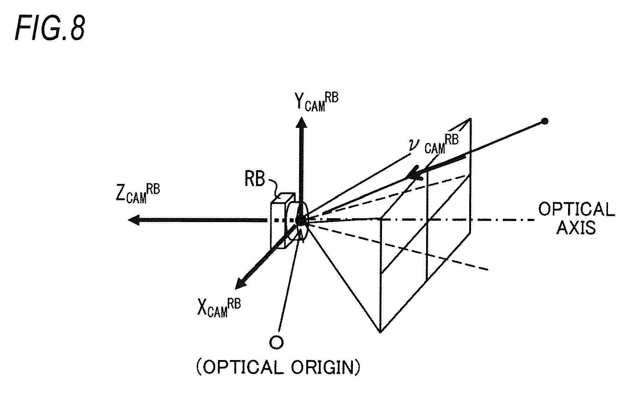

In addition, the incident light vector $V_{CAM}^{RB}$ in the camera coordinate system of the right virtual camera RB, as illustrated in FIG. 8, is transformed into an incident light vector $V^{PB}_{CAR}$ in the vehicle coordinate system illustrated in FIG. 6 according to the following equation (4). In the equation (4), $P^{-1}_{CAR \to CAM}{}^{RB}$ is the inverse matrix of a transformation matrix $P_{CAR \to CAM}{}^{RB}$ which may be generated according to the equation (2) based on the arrangement parameters of the right virtual camera RB. FIG. 8 is a view illustrating an example of the incident light vector $V_{CAM}^{RB}$ in the camera coordinate system of the right virtual camera RB.

$$V^{RB}_{CAR} = P^{-1}_{CAR \to CAM}{}^{RB} \times V_{CAM}{}^{RB} \quad \cdots (4)$$

In addition, the incident light vector $V^{RB}_{CAR}$ in the vehicle coordinate system may be transformed into an incident light vector $V_{CAM}{}^R$ in the camera coordinate system of the right camera 3R according to the following equation (5). In the equation (5), $P_{CAR \to CAM}{}^R$ is a transformation matrix $P_{CAR \to CAM}{}^R$ which may be generated according to the equation (2) based on the arrangement parameters of the right camera 3R.

$$V_{CAM}{}^R = P_{CAR \to CAM}{}^R \times V^{RB}_{CAR} \quad \cdots (5)$$

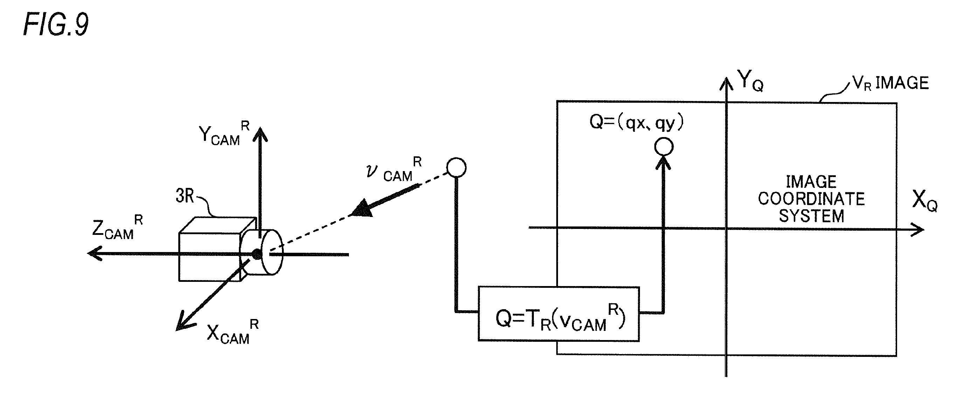

In addition, the incident light vector $V_{CAM}{}^R$ in the camera coordinate system of the right camera 3R may be associated with a pixel position on an image captured by the right camera 3R, as illustrated in FIG. 9. The following equation (6) is an expression illustrating such association. FIG. 9 is a view for explaining a method for specifying a pixel position from the incident light vector $V_{CAM}{}^R$.

$$Q^R = T_R(V_{CAM}{}^R) \quad \cdots (6)$$

In the equation (6), $TT_R$ represents a mapping table which associates the incident light vector $V_{CAM}{}^R$ with a pixel position on a camera image of the right camera 3R in a one-to-one correspondence. The mapping table $T_R$ may be preset based on data indicating distortion (lens distortion) and a camera parameter (pixel pitch).

As described above, by specifying a pixel on the camera image of the right camera 3R, which corresponds to a pixel on the image of the right rear side field-of-view $V_{RB}$ of the right virtual camera RB, and setting a pixel value of the specified pixel as a pixel value of the corresponding pixel on the image of the right rear side field-of-view $V_{RB}$, the first field-of-view converting process for converting the camera image of the right camera 3R into the image of the right rear side field-of-view $V_{RB}$ is performed.

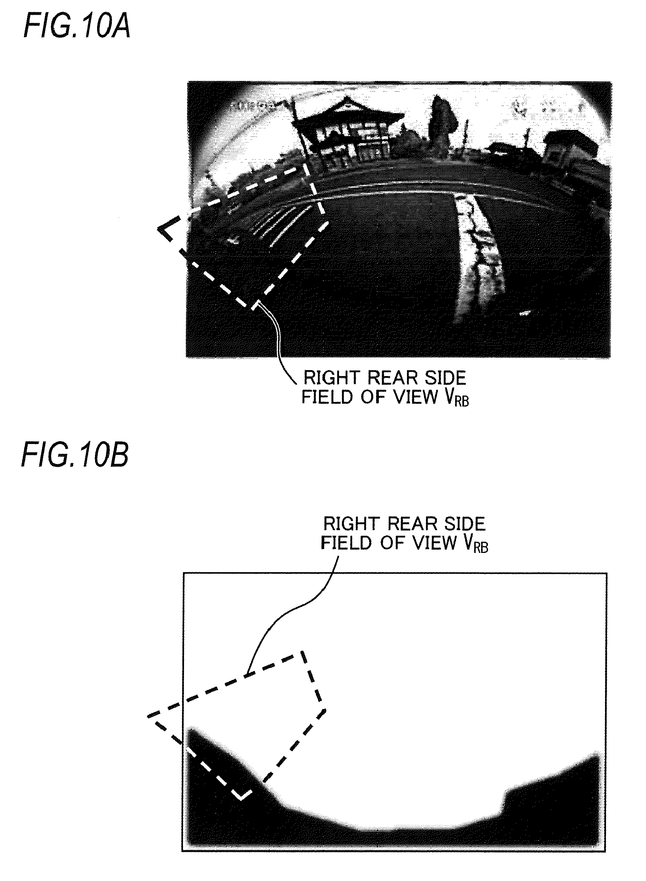

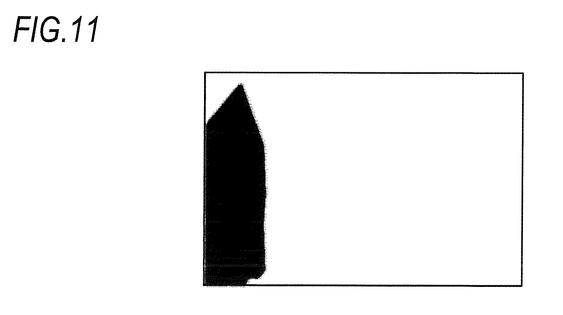

Next, a field-of-view converting process for the mask image of a reference vehicle body will be described with reference to FIG. 10 and FIG. 11. FIG. 10A illustrates an example of a camera image of the right camera 3R and FIG. 10B illustrates an example of a reference vehicle body mask image of the right camera 3R, which corresponds to the example of FIG. 10A. FIG. 11 illustrates an example of an image obtained as a result of the field-of-view conversion for the reference vehicle body mask image illustrated in FIG. 10B.

As illustrated in FIG. 10B, the mask image of the reference vehicle body of the right camera 3R corresponds to a vehicle body region in the camera image of the right camera 3R. Here, the pixel value of the vehicle body region is set to "0" and the pixel value of other regions is set to "1".

Since the vehicle body region in the camera image of the right camera 3R is photographed at the same position at all times as long as the arrangement parameter of the right camera 3R is not changed, the mask image of the reference vehicle body of the right camera 3R may be created once in arrangement of the right camera 3R.

Then, by subjecting the mask image of the reference vehicle body of the right camera 3R to the above-described first field-of-view converting process, the mask image of the vehicle body after the field-of-view conversion is produced as illustrated in FIG. 11.

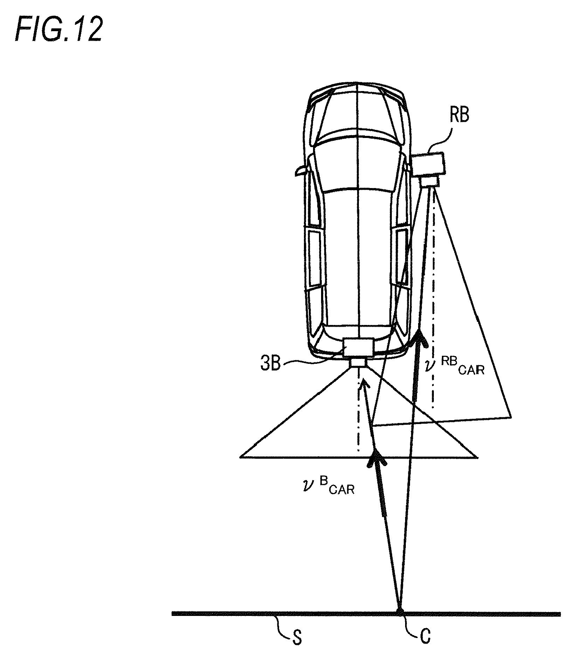

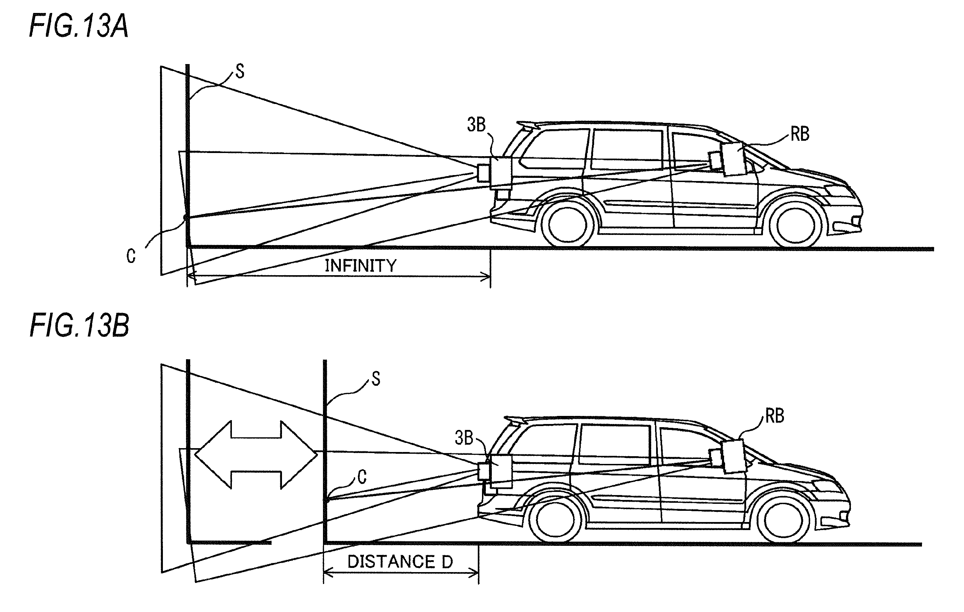

Next, a second field-of-view converting process for converting a camera image of the rear camera 3B into an image of the right rear side field-of-view $V_{RB}$ will be described with reference to FIG. 12 and FIG. 13. FIG. 12 is a view for explaining field-of-view conversion from the rear camera 3B to the right visual camera RB. FIG. 13A illustrates a configuration example of a projection surface S formed by a road surface and a vertical plane placed at infinity. FIG. 13B illustrates a configuration example of a projection surface S formed by a road surface and a vertical plane placed at a distance calculated by a distance sensor.

As described in the first field-of-view converting process, , an incident light vector $V_{CAM}{}^{RB}$ in a camera coordinate system of the right virtual camera RB at a point corresponding to the coordinate $(x, y)^{RB}$ may be calculated according to the equations (3.1) and (3.2) from the coordinate $(x, y)^{RB}$ of any point on the image of the right rear side field-of-view

$V_{RB}$ imaged by the right virtual camera RB.

In addition, the incident light vector $V_{CAM}{}^{RB}$ in the camera coordinate system of the right virtual camera RB may be transformed into an incident light vector $V^{RB}{}_{CAR}$ in the vehicle coordinate system according to the equation (4). Then, as illustrated in FIG. 12, assuming that C denotes an intersection of any projection surface S defined in the vehicle coordinate system and a line segment extending from the optical origin of the right virtual camera RB in a direction opposite to the incident light vector $V^{RB}{}_{CAR}$, an incident light vector $V^{B}{}_{CAR}$ in the vehicle coordinate system which is directed from the intersection C to the optical origin of the rear camera 3B, may be calculated based on a coordinate of the intersection C in the vehicle coordinate system and an arrangement parameter of the rear camera 3B.

The vertical plane forming the projection surface S may be placed at a distance sufficiently far from the vehicle (or at infinity), as illustrated in FIG. 13A, or may be placed at a distance D to a rear object which is measured by the distance sensor 5, as illustrated in FIG. 13B. When the vertical plane that forms the projection surface S is placed at infinity, it is possible to reduce the parallax between the right virtual camera RB and the rear camera 3B.

In addition, the incident light vector $V^{B}{}_{CAR}$ in the vehicle coordinate system may be transformed into an incident light vector $V_{CAM}{}^{B}$ in the camera coordinate system of the rear camera 3B according to the following equation (7). In the equation (7), $P_{CAR \to CAM}{}^{B}$ is a transformation matrix $P_{CAR \to CAM}{}^{B}$ which may be generated according to the equation (2) based on the arrangement parameter of the rear camera 3B.

$$V_{CAM}{}^{B} = P_{CAR \to CAM}{}^{B} \times V^{B}{}_{CAR} \quad \cdots \cdots (7)$$

In addition, the incident light vector $V_{CAM}{}^{B}$ in the camera coordinate system of the rear camera 3B may be associated with a pixel position on an image captured by the rear camera 3B, as described previously. The following equation (8) is an expression illustrating such association.

$$Q^{B} = T_{B}(V_{CAM}{}^{B}) \quad \cdots \cdots (8)$$

In the equation (8), $T_{B}$ represents a mapping table associating the incident light vector $V_{CAM}{}^{B}$ with a pixel position on a camera image of the rear camera 3B in a one-to-one correspondence. The mapping table $T_{B}$ may be preset based on data indicating distortion (lens distortion) and a camera parameter (pixel pitch).

As described above, by specifying a pixel on the camera image of the rear camera 3Bcorresponding to a pixel on the image of the right rear side field-of-view $V_{RB}$ of the right virtual camera RB, and setting a pixel value of the specified pixel as a pixel value of the corresponding pixel on the image of the right rear side field-of-view $V_{RB}$, the second field-of-view converting process is performed for converting the camera image of the rear camera 3B into the image of the right rear side field-of-view $V_{RB}$.

Next, a compositing process of a field-of-view conversion image of the right rear side field-of-view $V_{RB}$ generated by subjecting the camera image of the right camera 3R to the first field-of-view converting process (hereinafter referred to as a field-of-view conversion image R) and a field-of-view conversion image of the right rear side field-of-view $V_{RB}$ generated by subjecting the camera image of the rear camera 3B to the second field-of-view converting process (hereinafter referred to as a field-of-view conversion image BR), based on the mask image of the vehicle body obtained by the field-of-view conversion, will be described.

This compositing process is performed based on a value of the mask image of the vehicle body after the field-of-view conversion generated by subjecting the mask image of the reference vehicle body to the first field-of-view converting process. Here, assuming that the value of the mask image of the vehicle body after the field-of-view conversion in the coordinate $(x, y)^{RB}$ is "$\alpha$", the value of the field-of-view conversion image R in the coordinate $(x, y)^{RB}$ is $C_{R}$, and the value of the field-of-view conversion image $B^{R}$ in the coordinate $(x, y)^{RB}$ is $C_{B}{}^{R}$, a composite image pixel value $C_{D}$ in the coordinate $(x, y)^{RB}$ may be calculated according to the following equation (9).

$$C_{D} = \alpha \times C_{R} + (1 - \alpha)C_{B}{}^{R} \quad \cdots \cdots (9)$$

Although the pixel value "$\alpha$" is set to "0" in the vehicle body region and ""1" in other regions, the present disclosure is not limited thereto. For example, a pixel value of a contour portion of the vehicle body region may be set to a large value less than "1"" and a pixel value of the vehicle body region may be set to a value near "0" as it becomes far away from the contour portion. With this configuration, in a state where the contour portion of the vehicle body region, which is highly likely to contact a peripheral object, apparently left, a blind spot due to the vehicle body may be reduced by compositing the field-of-view conversion images BR in other vehicle body regions.

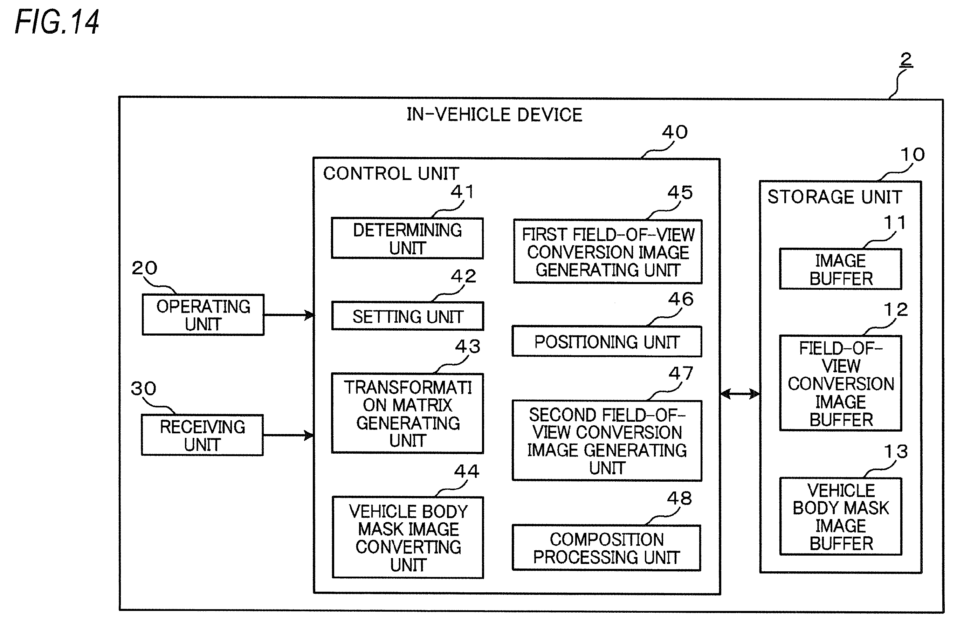

Next, the in-vehicle device 2 according to Embodiment 1 will be described with reference to FIG. 14. FIG. 14 is a functional block diagram illustrating a configuration example of the in-vehicle device 2 according to Embodiment 1. Referring to FIG. 14, the in-vehicle device 2 according to Embodiment 1 includes a storage unit 10, an operating unit 20, a receiving unit 30 and a control unit 40.

The storage unit 10 is constituted by, for example, RAM (Random Access Memory), ROM (Read Only Memory), or HDD (Hard Disk Drive). The storage unit 10 acts as a work area of, for example, CPU (Central Processing Unit) constituting the control unit 40, a program area storing various programs such as, for example, an operation program for controlling the overall operation of the in-vehicle device 2, and a data area storing various data such as arrangement parameters of the cameras 3, mapping tables TR, TL and TB of the cameras 3, and the mask image of the reference vehicle body of the right camera 3R and the left camera 3L.

The storage unit 10 also acts as an image buffer 11, a field-of-view conversion image buffer 12 and a vehicle body mask image buffer 13. The image buffer 11 stores image data of the vicinity of the vehicle, captured by the cameras 3, sequentially. The field-of-view conversion image buffer 12 is a buffer which is used when a camera image is subjected to a field-of-view converting process and the vehicle body mask image buffer 13 is a buffer which is used when the mask image of a reference vehicle body is subjected to a field-of-view converting process.

The operating unit 20 is constituted by various buttons, a touch panel displayed on a display screen of the monitor 4, and so on. A user (e.g., a driver) may execute a desired process by manipulating the operating unit 20.

The receiving unit receives operation information indicating the contents of operation of the vehicle from the vehicle. For example, the operation information refers to information indicating the contents of shift operation, accelerator operation, handle operation, winker operation.

The control unit 40 is constituted by, for example, a CPU and executes the operation program stored in the program area of the storage unit 10. As illustrated in FIG. 14, the control unit 40 implements functions for a determining unit 41, a setting unit 42, a transformation matrix generating unit 43, a vehicle body mask image converting unit 44, a first field-of-view conversion image generating unit 45, a positioning unit 46, a second field-of-view conversion image generating unit 47 and a composition processing unit 48, and performs a control process for controlling the overall operation of the in-vehicle device 2 and a process such as an image compositing process which will be described later in detail.

The determining unit 41 determines whether an instruction to end an image compositing process, which will be described later in detail, is issued. For example, if a predetermined manipulation is made by a user through the operating unit 20, the determining unit 41 determines whether the ending of the image compositing process is instructed. In addition, for example, if a shift lever of the vehicle equipped with the in-vehicle device 2 is in the state of parking, when preset ending conditions are satisfied, the determining unit 41 determines that the instruction to end the image compositing process is issued.

Further, the determining unit 41 determines whether setting of a field of view of the right virtual camera RB (or the left virtual camera LB) is changed. More specifically, if a horizontal field angle $A_H$ or an arrangement parameter (arrangement angle) of the right virtual camera RB (or the left virtual camera LB) is changed by the setting unit 42, the determining unit 41 determines that the setting of the field of view of the right virtual camera RB (or the left virtual camera LB) is changed. Further, when it is determined that the setting of the field of view of the right virtual camera RB (or the left virtual camera LB) is changed, the determining unit 41 also determines whether the arrangement parameter (arrangement angle) of the right virtual camera RB (or the left virtual camera LB) is changed.

The setting unit 42 sets the field of view of the right virtual camera RB (or the left virtual camera LB). More specifically, the setting unit 42 sets the field of view of the right virtual camera RB (or the left virtual camera LB) by setting the arrangement parameter (arrangement angle) and the horizontal field angle $A_H$ based on the contents of vehicle operation of a driver specified by operation information received in the receiving unit 30 or the contents set by the driver or the like through the operating unit 20.

The transformation matrix generating unit 43 calculates vector transformation matrixes $P_{CAR \rightarrow CAM}{}^R$, $P_{CAR \rightarrow CAM}{}^L$ and $P_{CAR \rightarrow CAM}{}^B$ from a vehicle coordinate system into each camera coordinate system according to the above-described equation (2) based on the arrangement parameters of the cameras 3 stored in the data area of the storage unit 10. In addition, the transformation matrix generating unit 43 calculates an inverse matrix of transformation matrix $P^{-1}{}_{CAR \rightarrow CAM}{}^{RB}$ from the vehicle coordinate system into the camera coordinate system of the right virtual camera RB and an inverse matrix of transformation matrix $P^{-1}{}_{CAR \rightarrow CAM}{}^{LB}$ from the vehicle coordinate system into the camera coordinate system of the left virtual camera LB according to the above-described equation (2) based on the arrangement parameters of the right virtual camera RB and the left virtual camera LB set by the setting unit 42.

In addition, when it is determined by the determining unit 41 that the arrangement parameter (arrangement angle) of the right virtual camera RB (or the left virtual camera LB) is changed, the transformation matrix generating unit 43 recalculates an inverse matrix of transformation matrix $P^{-1}_{CAR \rightarrow CAM}{}^{RB}$ (or $P^{-1}_{CAR \rightarrow CAM}{}^{LB}$) of the right virtual camera RB (or the left virtual camera LB) of which the arrangement parameters are changed based on the changed arrangement parameter.

The vehicle body mask image converting unit 44 generates vehicle body mask images having a field of view converted by subjecting the mask images of the reference vehicle body of the right camera 3R and the left camera 3L stored in the data area of the storage unit 10 to the above-described first field-of-view converting process.

The first field-of-view conversion image generating unit 45 generates a field-of-view conversion image R (or a field-of-view conversion image L) obtained by converting the camera image of the right camera 3R (or the left camera 3L) into an image of the right rear side field of view $V_{RB}$ of the right virtual camera RB (or an image of the left rear side field of view $V_{LB}$ of the left virtual camera LB) according to the above-described first field-of-view converting process.

The positioning unit 46 determines the position of a vertical plane forming a projection surface S based on a distance D to a peripheral object in the rear side of the vehicle calculated by the distance sensor 5. For example, if the distance D is not calculated due to non-existence of a peripheral object within a measurement range of the distance sensor 5 or if the calculated distance D exceeds a preset distance threshold, the positioning unit 46 assumes the position of the vertical plane at infinity. If the calculated distance D is smaller than the preset distance threshold, the positioning unit 46 sets the position of the vertical plane as the calculated distance D.

The second field-of-view conversion image generating unit 47 generates a field-of-view conversion image $B^R$ (or a field-of-view conversion image $B^L$) obtained by converting the camera image of the rear camera 3B into an image of the right rear side field of view $V_{RB}$ of the right virtual camera RB (or an image of the left rear side field of view $V_{LB}$ of the left virtual camera LB) according to the above-described second field-of-view converting process.

The composition processing unit 48 composes the field-of-view conversion image R (or the field-of-view conversion image L) generated by the first field-of-view conversion image generating unit 45 and the field-of-view conversion image $B^R$ (or the field-of-view conversion image $B^L$) generated by the second field-of-view conversion image generating unit 47 according to the above-described equation (9). Then, the composition processing unit 48 displays the result of the compositing process on the display screens of the right monitor 4R and the left monitor 4L.

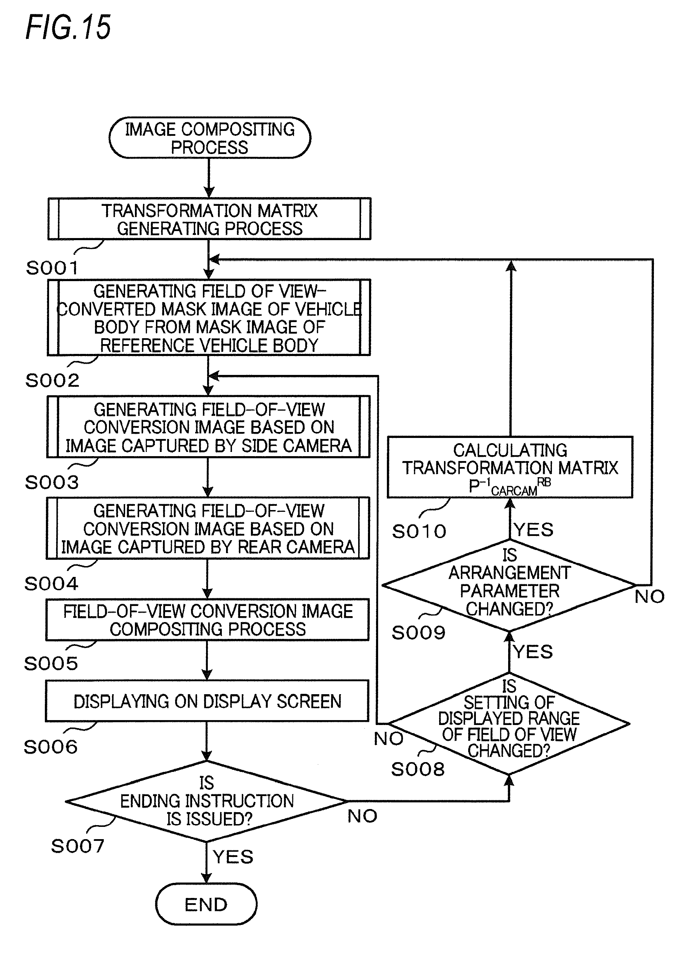

Next, a flow of the image compositing process according to Embodiment 1 will be described with reference to FIG. 15. FIG. 15 is an exemplary flow chart for explaining the flow of the image compositing process according to Embodiment 1. The image compositing process begins with image data, which are obtained by the cameras 3 and stored in the image buffer 11, as a trigger.

The transformation matrix generating unit 43 performs a transformation matrix generating process (Step S001) and the vehicle body mask image converting unit 44 generates vehicle body mask images having a field of view converted by subjecting the mask images of the reference vehicle body of the right camera 3R and the left camera 3L to the above-described first field-of-view converting process (Step S002).

The first field-of-view conversion image generating unit 45 generates a field-of-view conversion image R (or a field-of-view conversion image L) from a camera image of the right camera 3R (or the left camera 3L) according to the above-described first field-of-view converting process (Step S003). The second field-of-view conversion image generating unit 47 generates a field-of-view conversion image $B^R$ (or a field-of-view conversion image $B^L$) from a camera image of the rear camera 3B according to the above-described second field-of-view converting process (Step S004).

The composition processing unit 48 composes the field-of-view conversion image R (or the field-of-view conversion image L) generated at Step S003 and the field-of-view conversion image $B^R$ (or the field-of-view conversion image $B^L$) generated at Step S004 according to the above-described equation (9) (Step S005).

The composition processing unit 48 displays a result of the compositing process on the display screens of the right monitor 4R and the left monitor 4L (Step S006) and the determining unit 41 determines whether ending of an image compositing process is instructed (Step S007).

When it is determined that the ending of the image compositing process is not yet instructed ("NO" at Step S007), the determining unit 41 determines whether setting of the field of view of the right virtual camera RB (or the left virtual camera LB) is changed (Step S008).

When it is determined by the determining unit 41 that the setting of the field of view is not changed ("NO" at Step S008), the process returns to Step S003 and the above steps subsequent to Step S003 are repeated. Otherwise ("YES" at Step S008), the determining unit 41 determines whether an arrangement parameter (arrangement angle) of the right virtual camera RB (or the left virtual camera LB) is changed (Step S009).

When it is determined by the determining unit 41 that the arrangement parameter (arrangement angle) is changed ("YES" at Step S009), the transformation matrix generating unit 43 recalculates an inverse matrix of transformation matrix $P^{-1}_{CAR \rightarrow CAM}{}^{RB}$ (or $P^{-1}_{CAR \rightarrow CAM}{}^{RB}$) of the right virtual camera RB (or the left virtual camera LB) of which the arrangement parameters are changed based on the changed arranged parameter (Step S010). Then, the process returns to Step S002 and the steps subsequent to Step S002 are repeated.

When it is determined by the determining unit 41 that the arrangement parameter (arrangement angle) is not changed ("NO" at Step S009), the process returns to Step S002 and the steps subsequent to Step S002 are repeated.

On the other hand, when it is determined by the determining unit 41 at Step S007 that the ending of the image compositing process is instructed ("YES" at Step S007), the process ends.

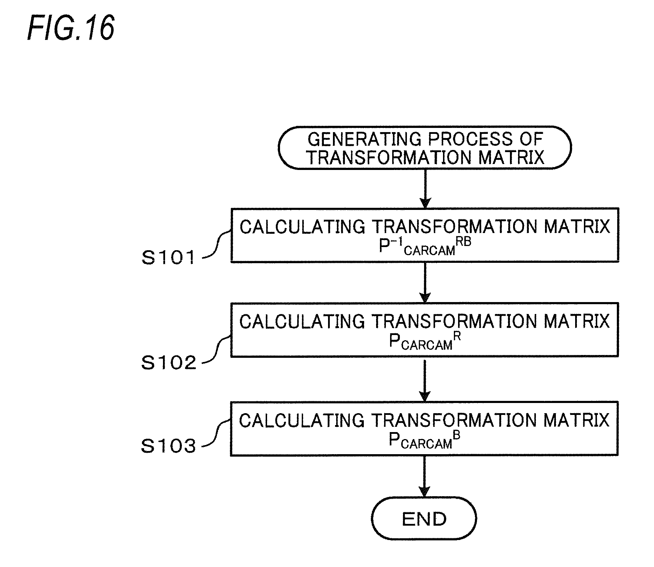

Next, a flow of the generating process of the transformation matrix according to Embodiment 1 will be described with reference to FIG. 16. FIG. 16 is an exemplary flow chart for explaining a flow of the generating process of the transformation matrix according to Embodiment 1. The generating process of the transformation matrix is a process corresponding to Step S001 of the above-described image compositing process. A process corresponding to the right camera 3R, which is similar to a process corresponding to the left camera 3L, will be described below.

The transformation matrix generating unit 43 calculates an inverse matrix of a transformation matrix $P^{-1}{}_{CAR \rightarrow CAM}{}^{RB}$ transforming from the vehicle coordinate system into the camera coordinate system of the right virtual camera RB according to the above-described equation (2) based on an arrangement parameter of the right virtual camera RB set by the setting unit 42 (Step S101).

In addition, the transformation matrix generating unit 43 calculates a vector transformation matrix $P_{CAR \rightarrow CAM}{}^{B}$ transforming from the vehicle coordinate system into the camera coordinate system of the right camera 3R according to the above-described equation (2) based on an arrangement parameter of the right camera 3R stored in the data area of the storage unit 10 (Step S102).

In addition, the transformation matrix generating unit 43 calculates a vector transformation matrix $P_{CAR \rightarrow CAM}{}^{B}$ transforming from the vehicle coordinate system into the camera coordinate system of the rear camera 3B according to the above-described equation (2) based on an arrangement parameter of the rear camera 3B stored in the data area of the storage unit 10 (Step S103) and the process ends. Then, the process proceeds to Step S002 of the image compositing process.

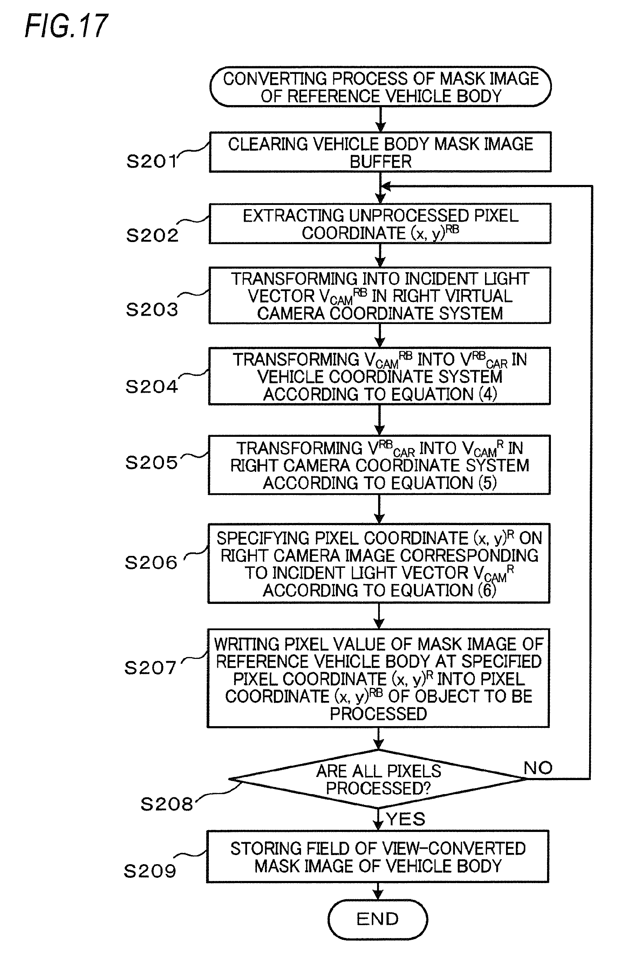

Next, a flow of the converting process of the mask image of the reference vehicle body according to Embodiment 1 will be described with reference to FIG. 17. FIG. 17 is an exemplary flow chart for explaining a flow of the converting process of the mask image of the reference vehicle body according to Embodiment 1. The converting process of the mask image of the reference vehicle body is a process corresponding to Step S002 of the above-described image compositing process. A process corresponding to the right camera 3R, which is similar to a process corresponding to the left camera 3L, will be described below.

The vehicle body mask image converting unit 44 clears the vehicle body mask image buffer 13 (Step S201) and extracts an unprocessed pixel coordinate $(x, y)^{RB}$ on an image of the right rear side field of view $V_{RB}$ of the right virtual camera RB (Step S202).

In addition, the vehicle body mask image converting unit 44 converts the extracted pixel coordinate $(x, y)^{RB}$ into an incident light vector $V_{CAM}{}^{RB}$ in the camera coordinate system of the right virtual camera RB according to the equations (3.1) and (3.2) (Step S203) and converts the incident light vector $V_{CAM}{}^{RB}$ in the camera coordinate system of the right virtual camera RB into an incident light vector $V^{RB}{}_{CAR}$ in the vehicle coordinate system according to the equation (4) (Step S204).

In addition, the vehicle body mask image converting unit 44 converts the incident light vector $V^{RB}{}_{CAR}$ in the vehicle coordinate system into an incident light vector $V_{CAM}{}^{R}$ in the camera coordinate system of the right camera 3R according to the equation (5) (Step S205) and specifies a pixel coordinate $(x, y)^{R}$ on a camera image of the right camera 3R corresponding to the incident light vector $V_{CAM}{}^{R}$ according to the equation (6) (Step S206).

In addition, the vehicle body mask image converting unit 44 writes a value of the mask image of the reference vehicle body at the specified pixel coordinate $(x, y)^{R}$ into a pixel coordinate $(x, y)^{RB}$ of an object to be processed (Step S207) and determines whether all pixel coordinates on the image of the right virtual camera RB have been processed (Step S208).

If any unprocessed pixel coordinates are left ("NO" at Step S208), the process returns to Step 202 and the steps subsequent to Step S202 are repeated. On the other hand, if a value of the mask image of the reference vehicle body at the specified pixel coordinate $(x, y)^{R}$ on the camera image of the right camera 3R is written for all pixel coordinates ("YES" at Step S208), the vehicle body mask image converting unit 44 stores the generated the mask image of vehicle body after the field-of-view conversion in the data area of the storage unit 10 (Step S209). At this time, if the mask image of the vehicle body after the field-of-view conversion is already present in the data area, it is overwritten. Then, the process ends and proceeds to Step S003 of the image compositing process.

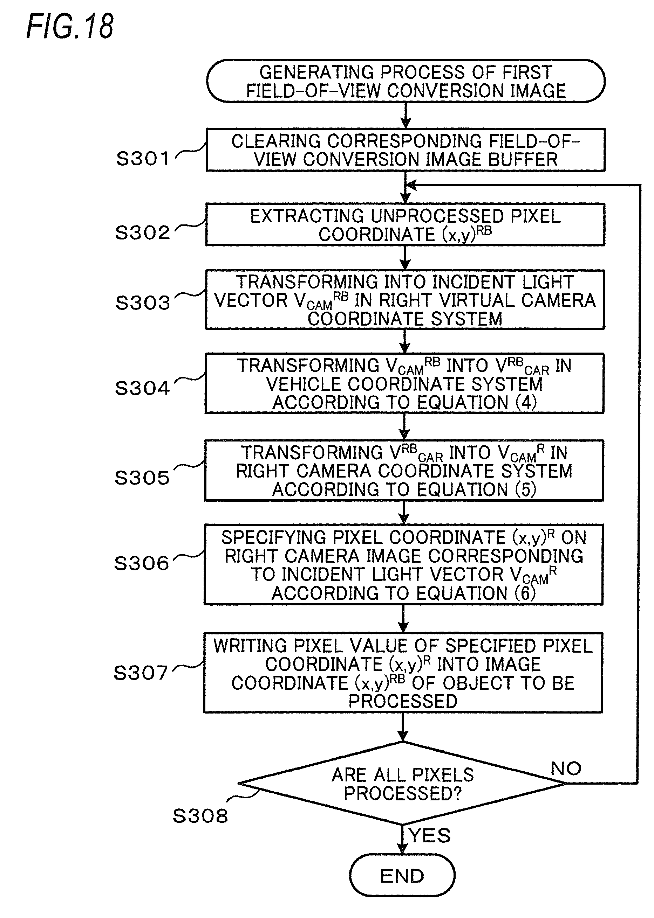

Next, a flow of the generating process of the first field-of-view conversion image according to Embodiment 1 will be described with reference to FIG. 18. FIG. 18 is an exemplary flow chart for explaining a flow of the generating process of the first field-of-view conversion image according to Embodiment 1. The generating process of the first field-of-view conversion image is a process corresponding to Step S003 of the above-described image compositing process. A process corresponding to the right camera 3R, which is similar to a process corresponding to the left camera 3L, will be described below.

The first field-of-view conversion image generating unit 45 clears the corresponding field-of-view image conversion buffer 12 (Step S301) and extracts an unprocessed pixel coordinate $(x, y)^{RB}$ on an image of the right rear side field of view $V_{RB}$ of the right virtual camera RB (Step S302).

In addition, the first field-of-view conversion image generating unit 45 converts the extracted pixel coordinate $(x, y)^{RB}$ into an incident light vector $V_{CAM}^{RB}$ in the camera coordinate system of the right virtual camera RB according to the equations (3.1) and (3.2) (Step S303) and converts the incident light vector $Y_{CAM}^{RB}$ in the camera coordinate system of the right virtual camera RB into an incident light vector $V^{RB}_{CAR}$ in the vehicle coordinate system according to the equation (4) (Step S304).

In addition, the first field-of-view conversion image generating unit 45 converts the incident light vector $V^{RB}_{CAR}$ in the vehicle coordinate system into an incident light vector $V_{CAM}^{R}$ in the camera coordinate system of the right camera 3R according to the equation (5) (Step S305) and specifies a pixel coordinate $(x, y)^{R}$ on a camera image of the right camera 3R corresponding to the incident light vector $V_{CAM}^{R}$ according to the equation (6) (Step S306).

In addition, the first field-of-view conversion image generating unit 45 writes a pixel value at the specified pixel coordinate $(x, y)^{R}$ into a pixel coordinate $(x, y)^{RB}$ of an object to be processed (Step S307) and determines whether all pixel coordinates on the image of the right virtual camera RB have been processed (Step S308).

If any unprocessed pixel coordinates are left ("NO" at Step S308), the process returns to Step 302 and the steps subsequent to Step S302 are repeated. On the other hand, if a pixel value at the specified pixel coordinate $(x, y)^{R}$ on the camera image of the right camera 3R is written for all pixel coordinates ("YES" at Step S308), the process ends and proceeds to Step S004 of the image compositing process.

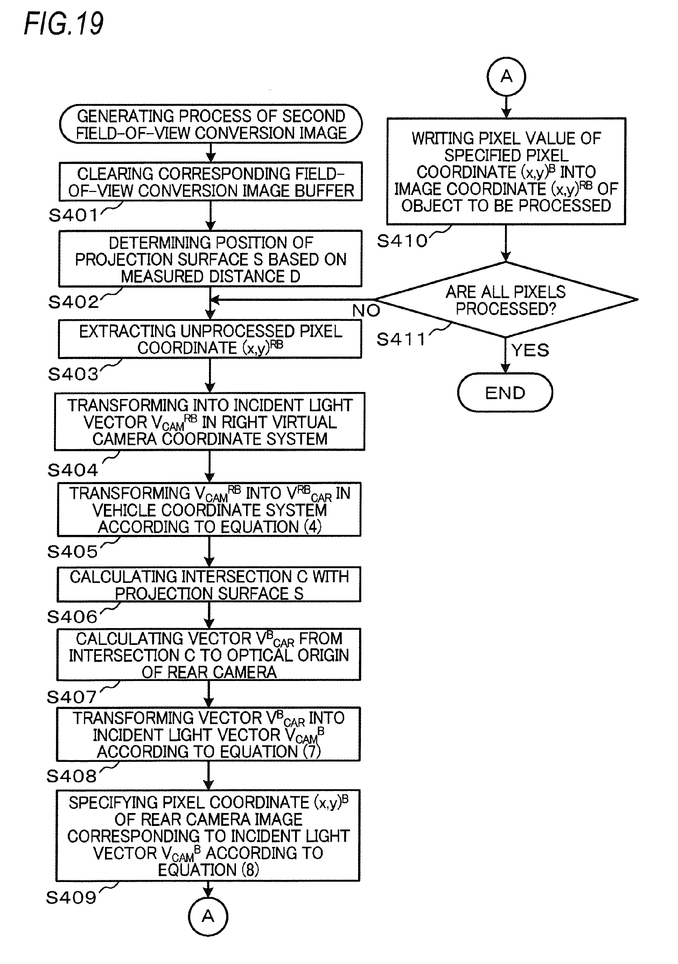

Next, a flow of the generating process of the second field-of-view conversion image according to Embodiment 1 will be described with reference to FIG. 19. FIG. 19 is an exemplary flow chart for explaining a flow of the generating process of the second field-of-view conversion image according to Embodiment 1. The generating process of the second field-of-view conversion image is a process corresponding to Step S004 of the above-described image compositing process. A process corresponding to the right camera 3R, which is similar to a process corresponding to the left camera 3L, will be described below.

The second field-of-view conversion image generating unit 47 clears the corresponding field-of-view image conversion buffer 12 (Step S401). Then, the positioning unit 46 determines a position of a vertical plane forming a projection surface S based on a distance D calculated by the distance sensor 5 (Step S402).

The second field-of-view conversion image generating unit 47 extracts an unprocessed pixel coordinate $(x, y)^{RB}$ on an image of the right rear side field of view $V_{RB}$ of the right virtual camera RB (Step S403) and converts the extracted pixel coordinate $(x, y)^{RB}$ into an incident light vector $V_{CAM}^{RB}$ in the camera coordinate system of the right virtual camera RB according to the equations (3.1) and (3.2) (Step S404).

In addition, the second field-of-view conversion image generating unit 47 converts the incident light vector $V_{CAM}^{RB}$ in the camera coordinate system of the right virtual camera RB into an incident light vector $V^{RB}_{CAR}$ in the vehicle coordinate system according to the equation (4) (Step S405) and calculates a coordinate in the vehicle coordinate system of an intersection C of the projection surface S formed by the vertical plane at the position determined by the positioning unit 46 and a line segment extending from the optical origin of the right virtual camera RB in a direction opposite to the incident light vector $V^{RB}_{CAR}$ (Step S406).

In addition, the second field-of-view conversion image generating unit 47 calculates an incident light vector $V^{B}_{CAR}$ in the vehicle coordinate system from the intersection C to the rear camera 3B (Step S407) and converts the calculated incident light vector $V^{B}_{CAR}$ into an incident light vector $V_{CAM}^{B}$ in the camera coordinate system of the rear camera 3B according to the equation (7) (Step S408).

In addition, the second field-of-view conversion image generating unit 47 specifies a pixel coordinate $(x, y)^{B}$ on a camera image of the rear camera 3B corresponding to the incident light vector $V_{CAM}$ according to the equation (8) (Step S409) and writes a pixel value of the specified coordinate $(x, y)^{B}$ into a pixel coordinate $(x, y)^{RB}$ of an object to be processed (Step S410).

In addition, the second field-of-view conversion image generating unit 47 determines whether all pixel coordinates on the image of the right virtual camera RB have been processed (Step S411). If any unprocessed pixel coordinates are left ("NO" at Step S411), the process returns to Step 403 and the steps subsequent to Step S403 are repeated.

On the other hand, if a pixel value at the specified pixel coordinate $(x, y)^{B}$ of the camera image of the rear camera 3B is written for all pixel coordinates ("YES" at Step S411), the process ends and proceeds to Step S005 of the image compositing process.

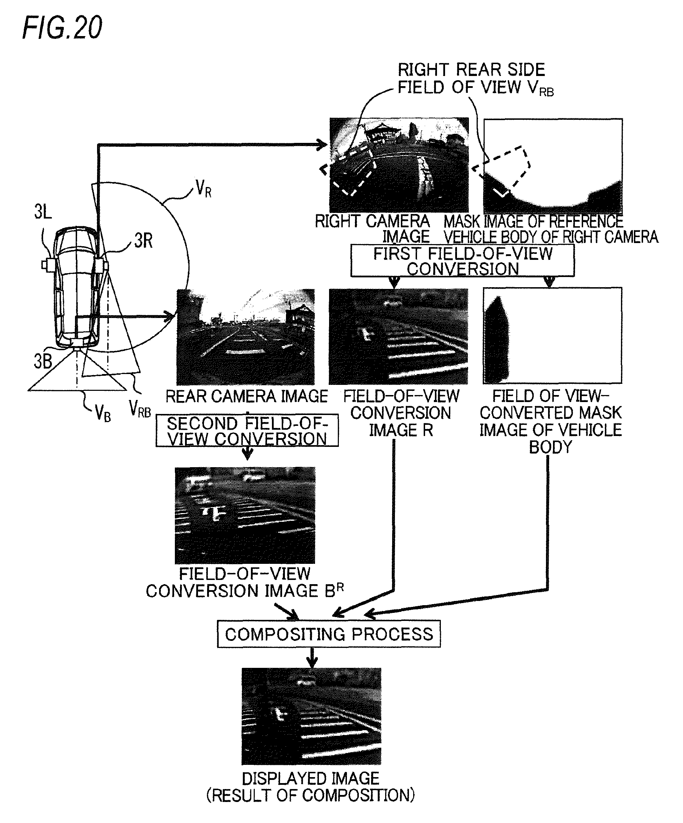

Next, a flow of the image compositing process will be described by way of an example with reference to FIG. 20. FIG. 20 is a view illustrating an example of a result of the image compositing process according to Embodiment 1. This example is an example of the process corresponding to the right camera 3R.

A right camera image captured by the right camera 3R and a mask image of the reference vehicle body of the right camera 3R are subjected to the first field-of-view converting process to generate a field-of-view conversion image R and a field-of-view conversion vehicle body mask image. In addition, a rear camera image captured by the rear camera 3B is subjected to the second field-of-view converting process to generate a field-of-view conversion image $B^{R}$.

Then, the field-of-view conversion image R and the field-of-view conversion image $B^R$ are composed based on a pixel value of the field-of-view conversion vehicle body mask image. That is, a blind spot may be reduced by compositing the rear camera image captured by the rear camera 3B to the vehicle body area of the field-of-view conversion image R.

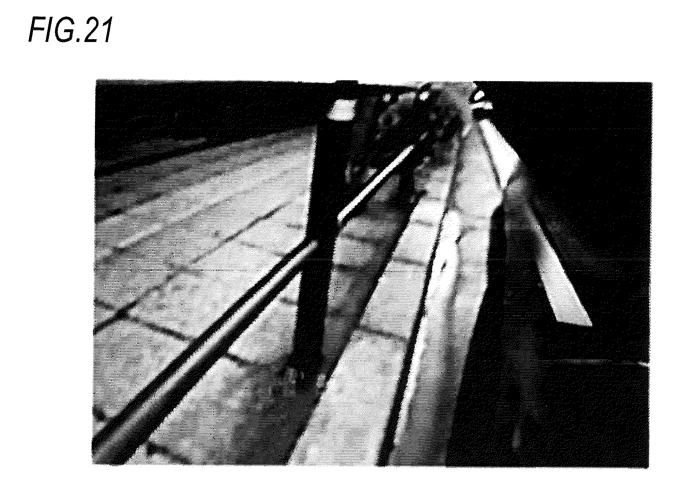

Although the process of compositing the image captured by the rear camera 3B to the vehicle body area of the rear side field of view has been described in Embodiment 1, the present invention is not limited thereto. For example, the configuration of Embodiment 1 may be applied to a case where an image captured by a front camera 3F is composed to a vehicle body area of a front side field of view. That is, the configuration of Embodiment 1 may be applied to a field of view image having the vehicle body as a blind spot. FIG. 21 is a view illustrating an example of a result of the image compositing process when the process is applied to a vehicle front side field of view.

According to Embodiment 1, an image obtained by imaging the surrounding environment acting as a blind spot by the vehicle body area is composed to the vehicle body area. With this configuration, since there is no need to see a plurality of monitors or the like in order to confirm the blind spot, the vicinity of the vehicle may be easily confirmed, which may contribute to safe driving.

In addition, according to Embodiment 1, the reference vehicle body mask image is used to specify a composite region. With this configuration, even when a field of view displayed on the monitors is varied, it is possible to specify a vehicle body area (composition region) in the varied field of view by only subjecting the reference vehicle body image to a field-of-view converting process.

In addition, according to Embodiment 1, a field of view of the mask image of the reference vehicle body is converted based on the field of view displayed on the monitors 4, and the field of view-converted vehicle body mask image is used for the compositing process. This configuration eliminates a need to prepare a plurality of vehicle body mask images corresponding to field of views under consideration and store these images in the data area of the storage unit 10, which may result in efficient resource utilization.

(Embodiment 2)

A method of generating a mask image of a reference vehicle body when the in-vehicle system 1 according to Embodiment 1 is equipped in a mass-produced vehicle will be described by way of Embodiment 2.

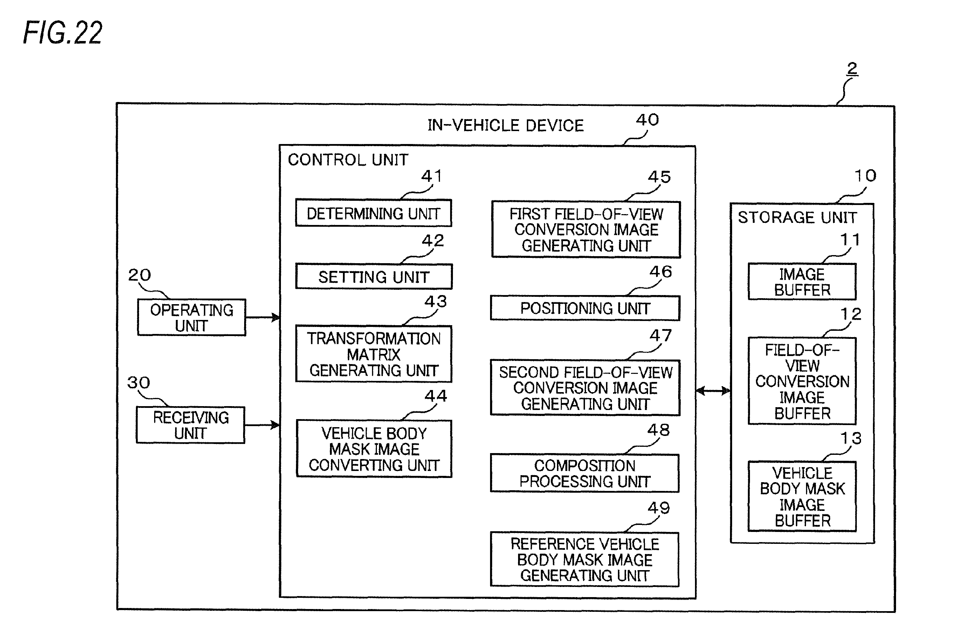

FIG. 22 is a functional block diagram illustrating a configuration example of an in-vehicle device 2 according to Embodiment 2. The in-vehicle device 2 according to Embodiment 2 has the same basic configuration as that in Embodiment 1 except that the control unit 40 also acts as a reference vehicle body mask image generating unit 49 and ideal arrangement parameters of the right camera 3R and the left camera 3L and an ideal vehicle body mask image are stored in the data area of the storage unit 10. In addition, some (e.g., transformation matrix generating unit 43) of the common functional units of the controller 40 are slightly different in role from those in Embodiment 1.

The ideal arrangement parameters are parameters indicating ideal installation conditions of the cameras 3 and may be created based CAD data or may be arrangement parameters measured by cameras 3 attached to a reference vehicle. In the following description, it is assumed that a right camera 3R and a left camera 3L arranged based on the ideal arrangement parameters is a right ideal camera RM and a left ideal camera LM, respectively. If there is a need to distinguish between the right ideal camera RM and the left ideal camera LM, these cameras are simply referred to as an ideal camera M.

An ideal vehicle body mask image is a vehicle body mask image obtained when the cameras 3 are arranged based on the ideal arrangement parameters, i.e., a mask image of a reference vehicle body of the ideal camera, and may be created based DCAD data or may be created based on images of the cameras 3 attached to the reference vehicle.

The controller 40 is constituted by, for example, a CPU and executes an operation program stored in the program area of the storage unit 10. As illustrated in FIG. 22, the control unit 40 implements functions as a determining unit 41, a setting unit 42, a transformation matrix generating unit 43, a vehicle body mask image converting unit 44, a first field-of-view conversion image generating unit 45, a positioning unit 46, a second field-of-view conversion image generating unit 47, a composition processing unit 48 and a reference vehicle body mask image generating unit 49 and performs a control process for controlling the overall operation of the in-vehicle device 2 and a process such as a reference vehicle body mask image generating process which will be described later in detail.

The transformation matrix generating unit 43 calculates a transformation matrix $P_{CAR \rightarrow CAM}^{RM}$ transforming from the vehicle coordinate system into the camera coordinate system of the right ideal camera RM and a transformation matrix $P_{CAR \rightarrow CAM}^{LM}$ transforming from the vehicle coordinate system into the camera coordinate system of the left ideal camera LM according to the equation (2) based on the ideal arrangement parameters stored in the data area of the storage unit 10, in addition to the above-described process in Embodiment 1.

In addition, the transformation matrix generating unit 43 generates the inverse matrix $P^{-1}_{CAR \rightarrow CAM}^{R}$ of a transformation matrix $P_{CAR \rightarrow CAM}^{L}$ and the inverse matrix $P^{-1}_{CAR \rightarrow CAM}^{R}$ of a transformation matrix $P_{CAR \rightarrow CAM}^{L}$ according to the equation (2) based on the arrangement parameters of the right camera 3R and the left camera 3L stored in the data area of the storage unit 10.

The reference vehicle body mask image generating unit 49 generates a reference vehicle body mask image based on the ideal vehicle body mask image stored in the data area of the storage unit 10.

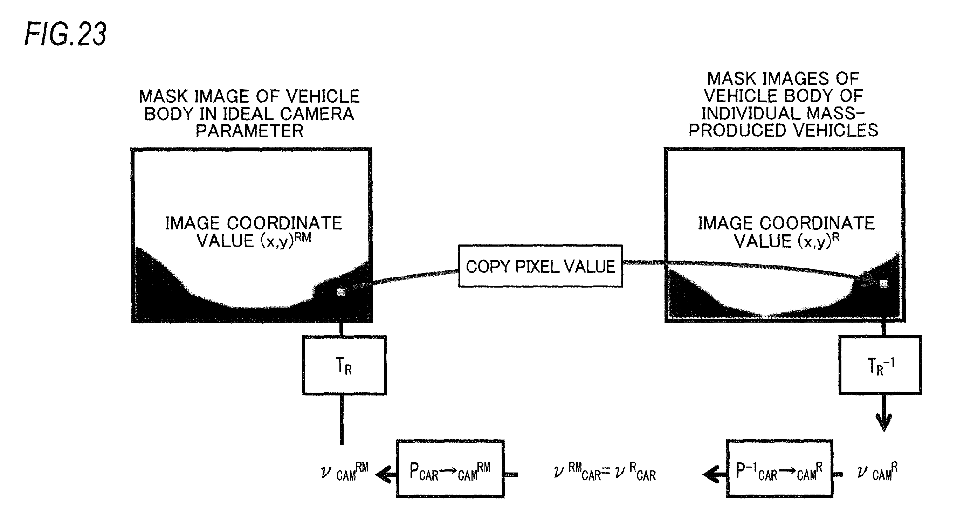

The process by the reference vehicle body mask image generating unit 49 will be described in more detail below with reference to FIG. 23. FIG. 23 is a view for explaining a method of generating a reference vehicle body mask image according to Embodiment 2. A process corresponding to the right camera 3R, which is similar to a process corresponding to the left camera 3L, will be described below. In addition, Embodiment 2 will be described under the presumption that a deviation in attachment position of the cameras 3 in a mass-produced vehicle is negligible.

It is assumed that a pixel coordinate on an ideal vehicle body mask image corresponding to any pixel coordinate $(x, y)^R$ on the mask image of the reference vehicle body of the right camera 3R is $(x, y)^{RM}$. The pixel coordinate $(x, y)^R$ may be transformed into an incident light vector $V_{CAM}^R$ in the camera coordinate system of the right camera 3R according to the following equation (10) and the incident light vector $V_{CAM}^R$ in the camera coordinate system of the right camera 3R may be transformed into an incident light vector $V^R_{CAR}$ in the vehicle coordinate system according to the following equation (11).

$$V_{CAM}^{RP} = T_R^{-1}((x, y)^P) \quad \cdots \cdots (10)$$

$$V^P_{CAR} = P^{-1}_{CAR \rightarrow CAM}{}^{RP} \times V_{CAM}^{RP} \quad \cdots \cdots (11)$$

Since the vehicle coordinate system does not depend on an arrangement angle of the camera 3, the incident light vector $V^R_{CAR}$ of the right camera 3R in the vehicle coordinate system may be regarded as being equal to an incident light vector $V^{RM}_{CAR}$ of the right ideal camera RM in the vehicle coordinate system.

Therefore, the incident light vector $V^R_{CAR}$ ($=V^{RM}_{CAR}$) in the vehicle coordinate system may be transformed into an incident light vector $V_{CAM}^{RM}$ in the camera coordinate system of the right ideal camera RM according to the following equation (12).

$$V_{CAM}^{RM} = P_{CAR \rightarrow CAM}{}^{RM} \times V^P_{CAR} \quad \cdots \cdots (12)$$

Here, if a difference in distortion (lens distortion) between the right ideal camera RM and the right camera 3R of the mass-produced vehicle is negligible, the incident light vector $V_{CAM}^{RM}$ in the camera coordinate system of the right ideal camera RM may be transformed into the pixel coordinate $(x, y)^{RM}$ according to the following equation (13) using the same mapping table TR.

$$(x, y)^M = T_R(V_{CAM}^{RM}) \quad \cdots \cdots (13)$$

In this manner, the reference vehicle body mask image is generated by writing a pixel value at a specified pixel coordinate $(x, y)^{RM}$ of the ideal vehicle body mask image into a pixel coordinate $(x, y)^R$ of the reference vehicle body mask image.

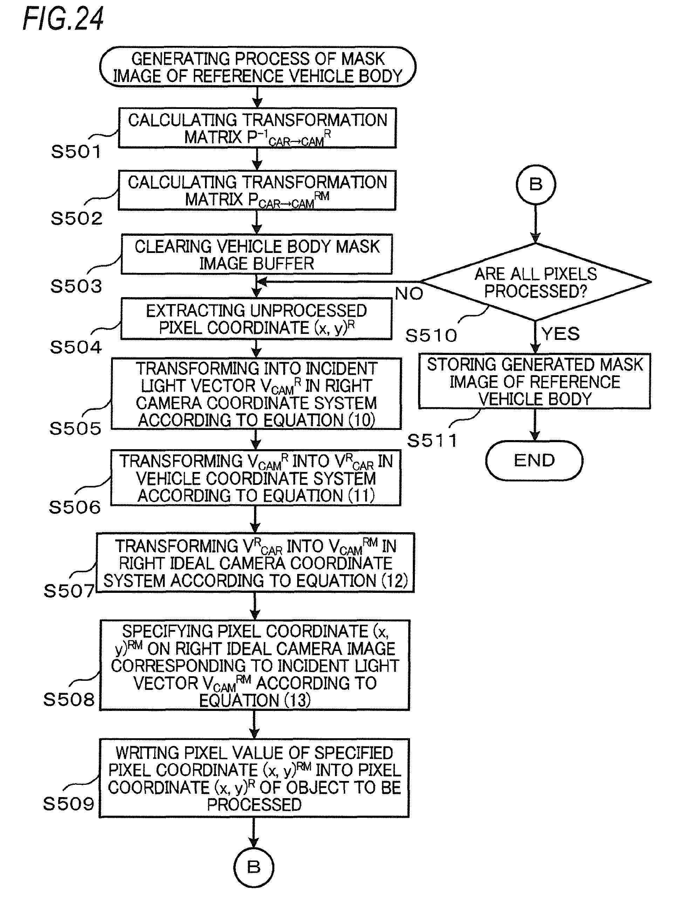

Next, a flow of reference vehicle body mask image generating process according to Embodiment 2 will be described with reference to FIG. 24. FIG. 24 illustrates an exemplary flow chart for explaining a flow of reference vehicle body mask image generating process according to Embodiment 2. The reference vehicle body mask image generating process begins with, for example, a predetermined operation through the operating unit 20, as a trigger. A process corresponding to the right camera 3R, which is similar to a process corresponding to the left camera 3L, will be described below.

The transformation matrix generating unit 43 calculates the inverse matrix $P^{-1}_{CAR \rightarrow CAM}{}^R$ of the transformation

matrix $P_{CAR \to CAM}^R$ according to the equation (2) based on the arrangement parameter of the right camera 3R (Step S501) and calculates a transformation matrix $P_{CAR \to CAM}^{RM}$ transforming from the vehicle coordinate system into the camera coordinate system of the right ideal camera RM according to the equation (2) based on the ideal arrangement parameter (Step S502).

The reference vehicle body mask image generating unit 49 clears the vehicle body mask image buffer 13 (Step S503) and extracts an unprocessed pixel coordinate $(x, y)^R$ of the mask image of the reference vehicle body of the right camera 3R (Step S504).

In addition, the reference vehicle body mask image generating unit 49 transforms the extracted pixel coordinate $(x, y)^R$ into an incident light vector $V_{CAM}^R$ in the camera coordinate system of the right camera 3R according to the equation (10) (Step S505) and transforms the incident light vector $V_{CAM}^R$ in the camera coordinate system of the right camera 3R into an incident light vector $V_{CAR}^R$ in the vehicle coordinate system according to the equation (11) (Step S506).

In addition, the reference vehicle body mask image generating unit 49 transforms the incident light vector $V_{CAR}^R$ ($=V_{CAR}^{RM}$) in the vehicle coordinate system into an incident light vector $V_{CAM}^{RM}$ in the camera coordinate system of the right ideal camera RM according to the following equation (12) (Step S507) and specifies a pixel coordinate $(x, y)^{RM}$ of the mask image of the ideal vehicle body of the right ideal camera RM corresponding to the incident light vector $V_{CAM}^{RM}$ according to the equation (13) (Step S508).

In addition, the reference vehicle body mask image generating unit 49 writes a value of the reference vehicle body mask image at the specified pixel coordinate $(x, y)^{RM}$ into a pixel coordinate $(x, y)^R$ of an object to be processed (Step S509) and determines whether all pixel coordinates on the mask image of the reference vehicle body of the right camera 3R have been processed (Step S510).

If any unprocessed pixel coordinates are left ("NO" at Step S510), the process returns to Step S504 and the steps subsequent to Step S504 are repeated. On the other hand, if a value of the ideal vehicle body mask image at the specified pixel coordinate $(x, y)^{RM}$ is written for all pixel coordinates ("YES" at Step S510), the reference vehicle body mask image generating unit 49 stores the generated vehicle body mask image in the data area of the storage unit 10 (Step S511) and the process ends.

According to Embodiment 2, a reference vehicle body mask image for each vehicle is generated by converting an ideal vehicle body mask image based on arrangement parameters of actual cameras 3. With this configuration, it is possible to reduce the number of processes in manufacturing mass-produced vehicles having variations of the arrangement parameters of the cameras 3, which may result in improvement of efficiency of manufacture.

(Embodiment 3)

A method of generating a mask image of a reference vehicle body of a mass-produced vehicle based on vehicle body shape data will be described by way of Embodiment 3.

The in-vehicle device 2 according to Embodiment 3 has the same basic configuration as that in Embodiment 2 except that vehicle body shape data are stored in the data area of the storage unit 10, instead of the ideal vehicle body mask image. In addition, some of the common functional units of the controller 40 (for example, the transformation matrix generating unit 43 and the reference vehicle body mask image generating unit 49) are slightly different in role from those in Embodiment 2.

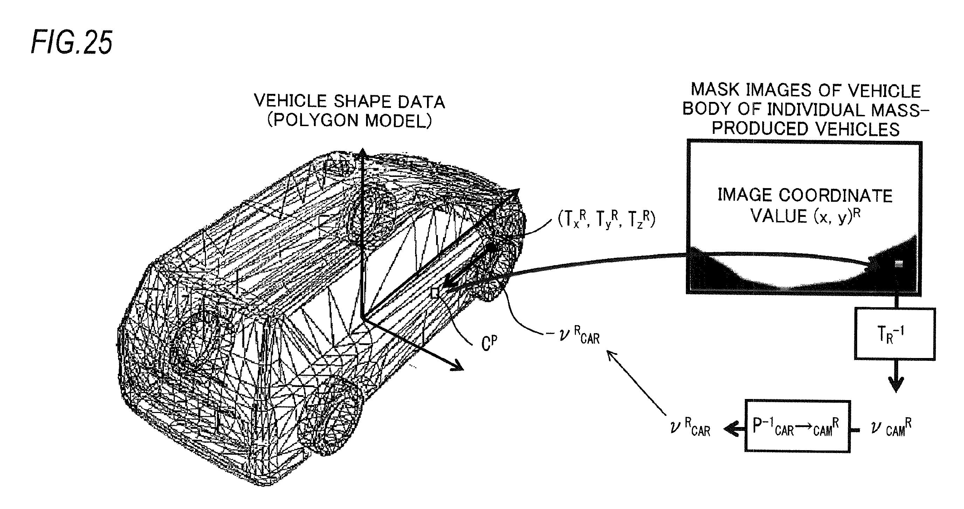

The vehicle body shape data are, for example, three-dimensional polygon data modelling the shape of the vehicle, which are defined in the vehicle coordinate system, as illustrated in FIG. 25.

The transformation matrix generating unit 43 generates the inverse matrix $P^{-1}_{CAR \to CAM}{}^R$ of a transformation matrix $P_{CAR \to CAM}^R$ and the inverse matrix $P^{-1}_{CAR \to CAM}{}^L$ of a transformation matrix $P_{CAR \to CAM}^L$ according to the equation (2) based on the arrangement parameters of the right camera 3R and the left camera 3L stored in the data area of the storage unit 10, in addition to the above-described process in Embodiment 1.

The reference vehicle body mask image generating unit 49 generates a reference vehicle body mask image based on the vehicle body shape data stored in the data area of the storage unit 10.

The process by the reference vehicle body mask image generating unit 49 will be described in more detail below with reference to FIG. 25. FIG. 25 is a view for explaining a method of generating a reference vehicle body mask image according to Embodiment 3. A process corresponding to the right camera 3R, which is similar to a process corresponding to the left camera 3L, will be described below.

Any pixel coordinate $(x, y)^R$ on the mask image of the reference vehicle body of the right camera 3R may be transformed into an incident light vector $V_{CAM}^R$ in the camera coordinate system of the right camera 3R according to the equation (10) and the incident light vector $V_{CAM}^R$ in the camera coordinate system of the right camera 3R may be transformed into an incident light vector $V_{CAR}^R$ in the vehicle coordinate system according to the equation (11).

It is here assumed that an arrangement coordinate in the vehicle coordinate system of the right camera 3R is $(Tx^R, Ty^R, Tz^R)$. At this time, if a line segment extending from the arrangement coordinate $(Tx^R, Ty^R, Tz^R)$ in a direction opposite to the vector $V_{CAR}^R$ has an intersection with a polygon constituting a vehicle body area within a polygon constituting the vehicle body shape data, it is assumed as the vehicle body area and a value "0" as a pixel value is written into the pixel coordinate $(x, y)^R$. On the other hand, if the extending line segment has no intersection with the polygon constituting the vehicle body area, it is not assumed as the vehicle body area and a value "1" as a pixel value is written into the pixel coordinate $(x, y)^R$.

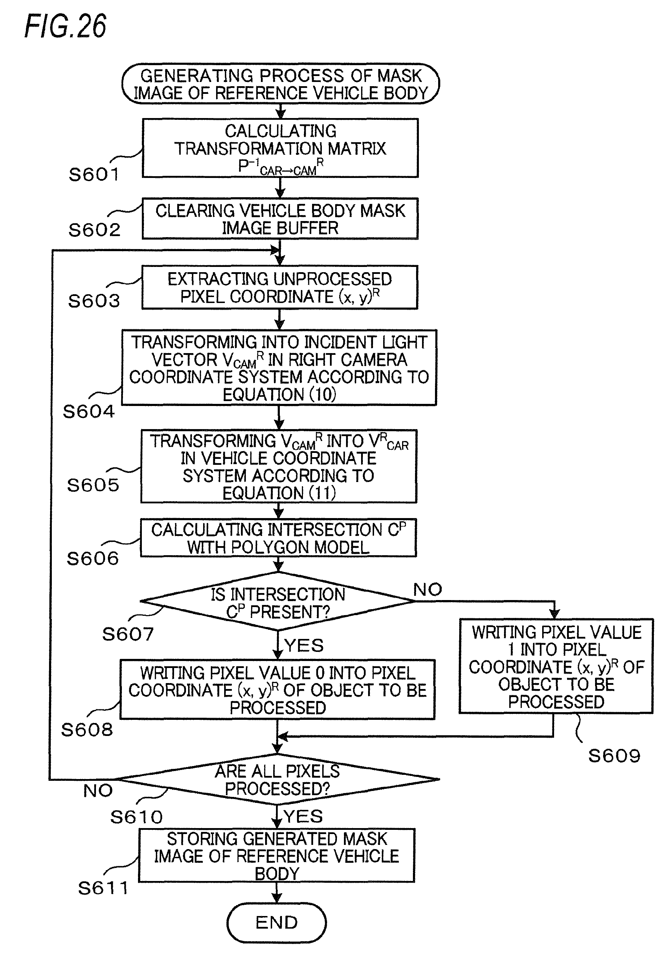

Next, a flow of reference vehicle body mask image generating process according to Embodiment 3 will be described with reference to FIG. 26. FIG. 26 illustrates an exemplary flow chart for explaining a flow of reference vehicle body mask image generating process according to Embodiment 3. The reference vehicle body mask image generating process begins with, for example, a predetermined operation through the operating unit 20, as a trigger. A process corresponding to the right camera 3R, which is similar to a process corresponding to the left camera 3L, will be described below.

The transformation matrix generating unit 43 calculates the inverse matrix $P^{-1}{}_{CAR \to CAM}{}^{RB}$ of the transformation matrix $P_{CAR \to CAM}{}^R$ according to the equation (2) based on the arrangement parameter of the right camera 3R (Step S601).

In addition, the reference vehicle body mask image generating unit 49 clears the vehicle body mask image buffer 13 (Step S602) and extracts an unprocessed pixel coordinate $(x, y)^R$ on the mask image of the reference vehicle body of the right camera 3R (Step S603).

In addition, the reference vehicle body mask image generating unit 49 transforms the extracted pixel coordinate $(x, y)^R$ into an incident light vector $V_{CAM}{}^R$ in the camera coordinate system of the right camera 3R according to the equation (10) (Step S604) and transforms the incident light vector $V_{CAM}{}^R$ in the camera coordinate system of the right camera 3R into an incident light vector $V^R{}_{CAR}$ in the vehicle coordinate system according to the equation (11) (Step S605).

In addition, the reference vehicle body mask image generating unit 49 calculates an intersection $C^P$ with a polygon constituting a vehicle body area within a polygon constituting the vehicle body shape data based on the incident light vector $V^R{}_{CAR}$ in the vehicle coordinate system (Step S606) in order to determine whether the intersection $C^P$ is present (Step S607). That is, it is determined whether the intersection $C^P$ could be calculated.

If the intersection $C^P$ is present ("YES" at Step S607), a pixel value "0" is written into a pixel coordinate $(x, y)^R$ of an object to be processed (Step S608). If the intersection $C^P$ is not present ("NO" at Step S607), a pixel value "1" is written into a pixel coordinate $(x, y)^R$ of the object to be processed (Step S609).

In addition, the reference vehicle body mask image generating unit 49 determines whether all pixel coordinates on the mask image of the reference vehicle body of the right camera 3R have been processed (Step S610).

If any unprocessed pixel coordinates are left ("NO" at Step S610), the process returns to Step S603 and the steps subsequent to Step S603 are repeated. On the other hand, if a pixel value is written for all pixel coordinates ("YES" at Step S610), the reference vehicle body mask image generating unit 49 stores the generated vehicle body mask image in the data area of the storage unit 10 (Step S611) and the process ends.

According to Embodiment 3, the reference vehicle body mask image is generated based on the vehicle body shape data and the arrangement parameter of the right camera 3R (or the left camera 3L). With this configuration, it is possible to generate a vehicle body mask image even when there is a deviation in arrangement position of the right camera 3R (or the left camera 3L).

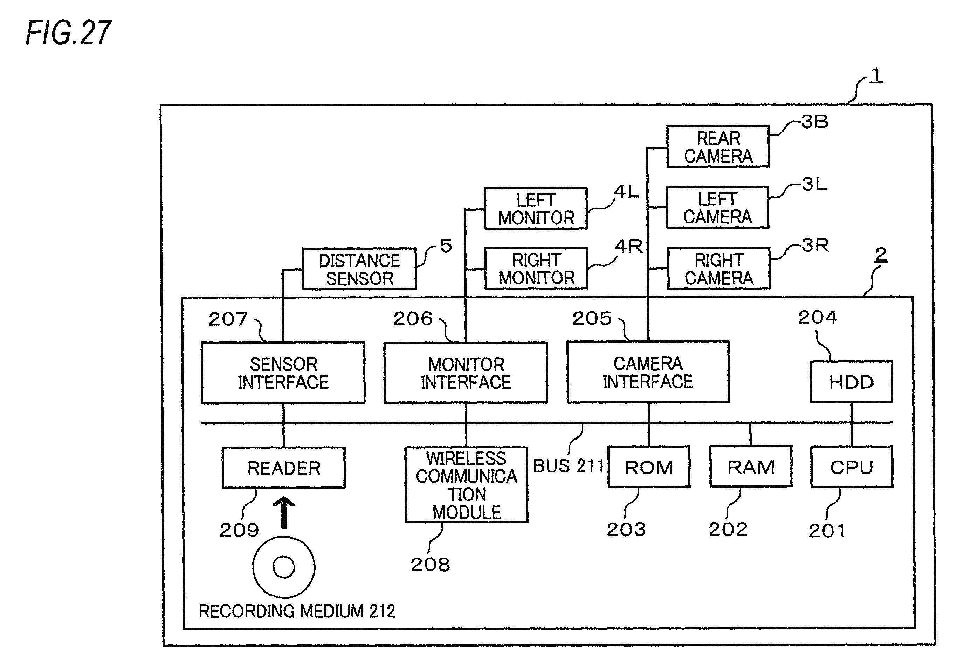

FIG. 27 is a view illustrating a hardware configuration example of the in-vehicle system 1 in each embodiment. The in-vehicle device 2 illustrated in FIG. 14 (or FIG. 22) may be implemented with, for example, various types of hardware illustrated in FIG. 27. In the example of FIG. 27, the in-vehicle device 2 includes CPU 201, RAM 202, ROM 203, HDD 204, a camera interface 205 connected with cameras 3, a monitor interface 206 connected with monitors 4, a sensor interface 207 connected with distance sensor 5, a wireless communication module 208 and a reader 209, all of which are interconnected via a bus 211.

The CPU 201 loads an operation program stored in the HDD 204 into the RAM 202 and executes various processes while using the RAM 202 as a working memory. The CPU 201 may execute the operation program to implement various functional units of the controller 40 illustrated in FIG. 14 (or FIG. 22).

In addition, the above-described processes may be executed by storing the operation program for executing the above-described operation in a computer-readable recording medium 212 such as a flexible disk, CD-ROM (Compact Disk-Read Only Memory), DVD (Digital Versatile Disk), MO (Magnetic Optical disk) or the like, distributing the operation program, reading the distributed operation program with the reader 209 of the in-vehicle device 2, and installing the read operation program in a computer. In addition, the operation program may be stored in a disk drive or the like of a server on Internet and downloaded into the computer of the in-vehicle device 2 via the wireless communication module 208.

In addition, according to some embodiments, different types of storage devices other than the RAM 202, ROM 203 and HDD 204 may be employed. For example, the in-vehicle device 2 may employ storage devices such as CAM (Content Addressable Memory), SRAM (Static Random Access Memory), SDRAM (Synchronous Dynamic Random Access Memory) and the like.

The wireless communication module 208 is hardware that handles a physical layer in a wireless connection. Examples of the wireless communication module 208 may include an ADC (Analog-to-Digital Converter), DAC (Digital-to-Analog Converter), modulator, demodulator, encoder, decoder and so on.

In addition, according to some embodiments, the hardware configuration of the in-vehicle system 1 may be different from that of FIG. 27 and hardware of different standards and types from those illustrated in FIG. 27 may be applied to the in-vehicle system 1.

For example, various functional units of the controller 40 of the in-vehicle device 2 illustrated in FIG. 14 (or FIG. 22) may be implemented with hardware circuits. Specifically, various functional units of the controller 40 of the in-vehicle device 2 illustrated in FIG. 14 (or FIG. 22) may be implemented with a reconfigurable circuit such as FPGA (Field Programmable Gate Array) or the like, ASIC (Application Specific Integrated Circuit) or the like, instead of the CPU 201. Of course, these functional units may be implemented with both of the CPU 201 and the hardware circuits.

Several exemplary embodiments have been described in the above. However, it is to be understood that various modifications and alternatives to the disclosed embodiments may be made. For example, the above embodiments are not intended to have a limited sense but may be modified and practiced in various ways without departing from the spirit and scope of the invention. Further, it is to be understood by those skilled in the art that different embodiments may be practiced by deleting some elements from the above embodiments, substituting some elements with other elements or adding some elements to the above embodiments.

**Claims**

1. An image processing apparatus comprising:

   a first field-of-view converting unit configured to convert an image of a first camera, which is equipped in a vehicle and arranged to include a portion of a vehicle body in an image capturing range, into an image having an arbitrary field of view within a field of view of the first camera;
   a second field-of-view converting unit configured to convert a blind spot image, which is an image of a second camera capturing an image of a peripheral environment acting as a blind spot by a region of the vehicle body of the image captured by the first camera, into the blind spot image having the same field of view as the field of view of the image obtained after the field-of-view conversion by the first field-of-view converting unit; and
   a compositing unit configured to compose a region corresponding to the blind spot image obtained by the conversion by the second field-of-view converting unit to the region of the vehicle body of the image obtained after the field-of-view conversion by the first field-of-view converting unit.

2. The image processing apparatus according to claim 1, further comprising:

   a storage unit configured to store a mask image of the vehicle body indicating the region of the vehicle body among images captured by the first camera; and
   a vehicle body mask image converting unit configured to convert the mask image of the vehicle body stored in the storage unit to have the same field of view as the field of view of the image obtained after the field-of-view conversion by the first field of view converting unit,
   wherein the compositing unit specifies a composite region based on the mask image of the vehicle body obtained after the field-of-view conversion by the vehicle body mask image converting unit.

3. The image processing apparatus of claim 2, further comprising a generating unit configured to generate the vehicle body mask image.

4. The image processing apparatus according to claim 3, wherein the generating unit generates the mask image of the vehicle body by converting the mask image of the vehicle body created under a reference arrangement condition in accordance with arrangement conditions of the first camera.

5. The image processing apparatus according to claim 3, wherein the generating unit generates the mask image of the vehicle body based on vehicle shape data modeled after a shape of the vehicle and an arrangement parameter indicating the arrangement conditions of the first camera.

6. The image processing apparatus according to any one of claims 1 through 5, further comprising a variable unit configured to vary the arbitrary field of view.

7. The image processing apparatus according to any one of claims 1 through 6, wherein the compositing unit composes the regions in such a manner that a contour of the vehicle body is left.

8. The image processing apparatus according to any one of claims 1 through 7, further comprising a display unit configured to display a result of the composition by the compositing unit on a display screen.

9. An image processing method comprising:

converting an image of a first camera, which is equipped in a vehicle and arranged to include a portion of a vehicle body in an image capturing range, into an image having an arbitrary field of view within a field of view of the first camera;
converting a blind spot image, which is an image of a second camera capturing an image of a peripheral environment acting as a blind spot by a region of the vehicle body of the image captured by the first camera, into the blind spot image having the same field of view as the field of view of the image obtained after the converting of the image of the first camera; and
compositing a region corresponding to the blind spot image obtained by the converting of the blind spot image to the region of the vehicle body of the image obtained after the converting of the image of the first camera.

10. A program causing a computer of an image processing apparatus to perform a method comprising:

converting an image of a first camera, which is equipped in a vehicle and arranged to include a portion of a body of the vehicle in an image capturing range, into an image of any field of view within a field of view of the first camera;
converting a blind spot image, which is an image of a second camera image-capturing a peripheral environment acting as a blind spot by a region of the vehicle body of the image captured by the first camera, into the blind spot image having the same field of view as the field of view of the image obtained after the conversion; and
compositing a region corresponding to the blind spot image obtained after the conversion to the region of the vehicle body of the image obtained after the conversion.

11. A non-transitory computer-readable recording medium storing a program that, when executed, causes a computer of an image processing apparatus to perform an image processing method, the method comprising:

converting an image of a first camera, which is equipped in a vehicle and arranged to include a portion of a vehicle body in an image capturing range, into an image having an arbitrary field of view within a field of view of the first camera;
converting a blind spot image, which is an image of a second camera capturing an image of a peripheral environment acting as a blind spot by a region of the vehicle body of the image captured by the first camera, into the blind spot image having the same field of view as the field of view of the image obtained after the converting of the image of the first camera; and
compositing a region corresponding to the blind spot image obtained by the converting of the blind spot image to the region of the vehicle body of the image obtained after the converting of the image of the first camera.

*FIG.1*

## FIG.2A

## FIG.2B

*FIG.3*

FIG.4

## FIG.5A

## FIG.5B

## FIG.5C

## FIG.5D

$Z_{CAR}$

$Y_{CAR}$

3

RotZ(Pan)

## FIG.5E

$Z_{CAR}$

$Y_{CAM}$

$Z_{CAM}$

3

$Y_{CAR}$

Translate(Tx,Ty,Tz)

## FIG.6

## FIG.7

$$f = \frac{width}{2 \times \tan\frac{A_H}{2}}$$

ORIGIN O
(OPTICAL ORIGIN OF RIGHT VIRTUAL CAMERA)

FIG.8

*FIG.9*

FIG.10A

RIGHT REAR SIDE
FIELD OF VIEW $V_{RB}$

FIG.10B

RIGHT REAR SIDE
FIELD OF VIEW $V_{RB}$

FIG.11

FIG.12

*FIG.13A*

INFINITY

*FIG.13B*

DISTANCE D

FIG.14

EP 2 860 691 A2

## FIG.15

IMAGE COMPOSITING
PROCESS

TRANSFORMATION MATRIX
GENERATING PROCESS

S001

GENERATING FIELD OF VIEW-
CONVERTED MASK IMAGE OF VEHICLE
BODY FROM MASK IMAGE OF
REFERENCE VEHICLE BODY

S002

GENERATING FIELD-OF-VIEW
CONVERSION IMAGE BASED ON
IMAGE CAPTURED BY SIDE CAMERA

S003

GENERATING FIELD-OF-VIEW
CONVERSION IMAGE BASED ON
IMAGE CAPTURED BY REAR CAMERA

S004

FIELD-OF-VIEW CONVERSION IMAGE
COMPOSITING PROCESS

S005

DISPLAYING ON DISPLAY SCREEN

S006

IS
ENDING INSTRUCTION
IS ISSUED?

S007

NO

YES

END

CALCULATING
TRANSFORMATION MATRIX
$P^{-1}_{CARCAM}{}^{RB}$

S010

YES

IS
ARRANGEMENT
PARAMETER
CHANGED?

S009

NO

YES

IS
SETTING OF
DISPLAYED RANGE
OF FIELD OF VIEW
CHANGED?

NO

S008

*FIG.16*

```
      ┌─────────────────────────────┐
      │  GENERATING PROCESS OF      │
      │  TRANSFORMATION MATRIX      │
      └─────────────────────────────┘
                    │
                    ▼
      ┌─────────────────────────────────────┐
      │ CALCULATING TRANSFORMATION MATRIX   │
S101  │          P⁻¹CARCAM^RB               │
      └─────────────────────────────────────┘
                    │
                    ▼
      ┌─────────────────────────────────────┐
      │ CALCULATING TRANSFORMATION MATRIX   │
S102  │          PCARCAM^R                  │
      └─────────────────────────────────────┘
                    │
                    ▼
      ┌─────────────────────────────────────┐
      │ CALCULATING TRANSFORMATION MATRIX   │
S103  │          PCARCAM^B                  │
      └─────────────────────────────────────┘
                    │
                    ▼
              ┌───────────┐
              │    END    │
              └───────────┘
```

S101 — CALCULATING TRANSFORMATION MATRIX $P^{-1}{}_{CARCAM}{}^{RB}$

S102 — CALCULATING TRANSFORMATION MATRIX $P_{CARCAM}{}^{R}$

S103 — CALCULATING TRANSFORMATION MATRIX $P_{CARCAM}{}^{B}$

## FIG.17

```
┌─────────────────────────────────────┐
│  CONVERTING PROCESS OF MASK IMAGE    │
│    OF REFERENCE VEHICLE BODY         │
└─────────────────────────────────────┘
                  │
                  ▼
S201 ┌─────────────────────────────────────┐
     │  CLEARING VEHICLE BODY MASK IMAGE   │
     │              BUFFER                 │
     └─────────────────────────────────────┘
                  │
                  ▼
S202 ┌─────────────────────────────────────┐
     │  EXTRACTING UNPROCESSED PIXEL       │
     │  COORDINATE (x, y)^RB               │
     └─────────────────────────────────────┘
                  │
                  ▼
S203 ┌─────────────────────────────────────┐
     │  TRANSFORMING INTO INCIDENT LIGHT   │
     │  VECTOR $V_{CAM}{}^{RB}$ IN RIGHT VIRTUAL │
     │  CAMERA COORDINATE SYSTEM           │
     └─────────────────────────────────────┘
                  │
                  ▼
S204 ┌─────────────────────────────────────┐
     │  TRANSFORMING $V_{CAM}{}^{RB}$ INTO $V^{RB}{}_{CAR}$ IN │
     │  VEHICLE COORDINATE SYSTEM          │
     │  ACCORDING TO EQUATION (4)          │
     └─────────────────────────────────────┘
                  │
                  ▼
S205 ┌─────────────────────────────────────┐
     │  TRANSFORMING $V^{RB}{}_{CAR}$ INTO $V_{CAM}{}^{R}$ IN │
     │  RIGHT CAMERA COORDINATE SYSTEM     │
     │  ACCORDING TO EQUATION (5)          │
     └─────────────────────────────────────┘
                  │
                  ▼
S206 ┌─────────────────────────────────────┐
     │  SPECIFYING PIXEL COORDINATE (x, y)^R ON │
     │  RIGHT CAMERA IMAGE CORRESPONDING   │
     │  TO INCIDENT LIGHT VECTOR $V_{CAM}{}^{R}$  │
     │  ACCORDING TO EQUATION (6)          │
     └─────────────────────────────────────┘
                  │
                  ▼
S207 ┌─────────────────────────────────────┐
     │  WRITING PIXEL VALUE OF MASK IMAGE OF │
     │  REFERENCE VEHICLE BODY AT SPECIFIED │
     │  PIXEL COORDINATE (x, y)^R INTO PIXEL │
     │  COORDINATE (x, y)^RB OF OBJECT TO BE │
     │  PROCESSED                          │
     └─────────────────────────────────────┘
                  │
                  ▼
S208        ◇ ARE ALL PIXELS ◇ ── NO ──┐
              PROCESSED?                 │
                  │ YES                  │
                  ▼                      │
S209 ┌─────────────────────────────────────┐
     │  STORING FIELD OF VIEW-CONVERTED    │
     │  MASK IMAGE OF VEHICLE BODY         │
     └─────────────────────────────────────┘
                  │
                  ▼
              (  END  )
```

# FIG.18

```
┌─────────────────────────────────────┐
│  GENERATING PROCESS OF FIRST         │
│  FIELD-OF-VIEW CONVERSION IMAGE      │
└─────────────────────────────────────┘
                   │
                   ▼
```

S301 — CLEARING CORRESPONDING FIELD-OF-VIEW CONVERSION IMAGE BUFFER

S302 — EXTRACTING UNPROCESSED PIXEL COORDINATE $(x,y)^{RB}$

S303 — TRANSFORMING INTO INCIDENT LIGHT VECTOR $V_{CAM}{}^{RB}$ IN RIGHT VIRTUAL CAMERA COORDINATE SYSTEM

S304 — TRANSFORMING $V_{CAM}{}^{RB}$ INTO $V^{RB}{}_{CAR}$ IN VEHICLE COORDINATE SYSTEM ACCORDING TO EQUATION (4)

S305 — TRANSFORMING $V^{RB}{}_{CAR}$ INTO $V_{CAM}{}^{R}$ IN RIGHT CAMERA COORDINATE SYSTEM ACCORDING TO EQUATION (5)

S306 — SPECIFYING PIXEL COORDINATE $(x,y)^{R}$ ON RIGHT CAMERA IMAGE CORRESPONDING TO INCIDENT LIGHT VECTOR $V_{CAM}{}^{R}$ ACCORDING TO EQUATION (6)

S307 — WRITING PIXEL VALUE OF SPECIFIED PIXEL COORDINATE $(x,y)^{R}$ INTO IMAGE COORDINATE $(x,y)^{RB}$ OF OBJECT TO BE PROCESSED

S308 — ARE ALL PIXELS PROCESSED? ── NO

│ YES

END

## FIG.19

```
┌──────────────────────────────────┐
│  GENERATING PROCESS OF SECOND    │
│  FIELD-OF-VIEW CONVERSION IMAGE  │
└──────────────────────────────────┘
                 │
                 ▼
┌──────────────────────────────────┐
│  CLEARING CORRESPONDING FIELD-   │
│  OF-VIEW CONVERSION IMAGE BUFFER │
└──────────────────────────────────┘
  S401
                 │
                 ▼
┌──────────────────────────────────┐
│  DETERMINING POSITION OF         │
│  PROJECTION SURFACE S BASED ON   │
│  MEASURED DISTANCE D             │
└──────────────────────────────────┘
  S402
                 │
                 ▼
┌──────────────────────────────────┐
│  EXTRACTING UNPROCESSED PIXEL    │
│  COORDINATE (x,y)^{RB}           │
└──────────────────────────────────┘
  S403
                 │
                 ▼
┌──────────────────────────────────┐
│  TRANSFORMING INTO INCIDENT LIGHT│
│  VECTOR V_{CAM}^{RB} IN RIGHT    │
│  VIRTUAL CAMERA COORDINATE SYSTEM│
└──────────────────────────────────┘
  S404
                 │
                 ▼
┌──────────────────────────────────┐
│  TRANSFORMING V_{CAM}^{RB} INTO  │
│  V^{RB}_{CAR} IN VEHICLE         │
│  COORDINATE SYSTEM ACCORDING TO  │
│  EQUATION (4)                    │
└──────────────────────────────────┘
  S405
                 │
                 ▼
┌──────────────────────────────────┐
│  CALCULATING INTERSECTION C WITH │
│  PROJECTION SURFACE S            │
└──────────────────────────────────┘
  S406
                 │
                 ▼
┌──────────────────────────────────┐
│  CALCULATING VECTOR V^{B}_{CAR}  │
│  FROM INTERSECTION C TO OPTICAL  │
│  ORIGIN OF REAR CAMERA           │
└──────────────────────────────────┘
  S407
                 │
                 ▼
┌──────────────────────────────────┐
│  TRANSFORMING VECTOR V^{B}_{CAR} │
│  INTO INCIDENT LIGHT VECTOR      │
│  V_{CAM}^{B} ACCORDING TO        │
│  EQUATION (7)                    │
└──────────────────────────────────┘
  S408
                 │
                 ▼
┌──────────────────────────────────┐
│  SPECIFYING PIXEL COORDINATE     │
│  (x,y)^{B} OF REAR CAMERA IMAGE  │
│  CORRESPONDING TO INCIDENT LIGHT │
│  VECTOR V_{CAM}^{B} ACCORDING TO │
│  EQUATION (8)                    │
└──────────────────────────────────┘
  S409
                 │
                 ▼
               ( A )
```

```
               ( A )
                 │
                 ▼
┌──────────────────────────────────┐
│  WRITING PIXEL VALUE OF          │
│  SPECIFIED PIXEL COORDINATE      │
│  (x,y)^{B} INTO IMAGE COORDINATE │
│  (x,y)^{RB} OF OBJECT TO BE      │
│  PROCESSED                       │
└──────────────────────────────────┘
  S410
                 │
                 ▼
         ◇──────────────◇
  NO    ╱  ARE ALL PIXELS ╲
◄───────   PROCESSED?      
  S411   ╲                ╱
         ◇──────────────◇
                 │ YES
                 ▼
             ( END )
```

## FIG.20

RIGHT REAR SIDE
FIELD OF VIEW $V_{RB}$

RIGHT CAMERA   MASK IMAGE OF REFERENCE
IMAGE   VEHICLE BODY OF RIGHT CAMERA

FIRST FIELD-OF-VIEW
CONVERSION

REAR CAMERA IMAGE   FIELD-OF-VIEW
CONVERSION
IMAGE R

FIELD OF VIEW-
CONVERTED MASK
IMAGE OF VEHICLE
BODY

SECOND FIELD-OF-
VIEW CONVERSION

FIELD-OF-VIEW
CONVERSION IMAGE $B^R$

COMPOSITING PROCESS

DISPLAYED IMAGE
(RESULT OF COMPOSITION)

*FIG.21*

*FIG.22*

EP 2 860 691 A2

# FIG.23

MASK IMAGE OF VEHICLE
BODY IN IDEAL CAMERA
PARAMETER

MASK IMAGES OF
VEHICLE BODY OF
INDIVIDUAL MASS-
PRODUCED VEHICLES

IMAGE COORDINATE
VALUE $(x,y)^{RM}$

IMAGE COORDINATE
VALUE $(x,y)^{R}$

COPY PIXEL VALUE

$T_R$

$T_R^{-1}$

$\nu_{CAM}^{RM}$ ← $P_{CAR \rightarrow CAM}^{RM}$ ← $\nu_{CAR}^{RM} = \nu_{CAR}^{R}$ ← $P_{CAR \rightarrow CAM}^{-1}{}^{R}$ ← $\nu_{CAM}^{R}$

## FIG.24

```
GENERATING PROCESS OF MASK
IMAGE OF REFERENCE VEHICLE BODY
```

S501 — CALCULATING TRANSFORMATION MATRIX $P^{-1}{}_{CAR \to CAM}{}^{R}$

S502 — CALCULATING TRANSFORMATION MATRIX $P_{CAR \to CAM}{}^{RM}$

S503 — CLEARING VEHICLE BODY MASK IMAGE BUFFER

S504 — EXTRACTING UNPROCESSED PIXEL COORDINATE $(x, y)^{R}$

S505 — TRANSFORMING INTO INCIDENT LIGHT VECTOR $V_{CAM}{}^{R}$ IN RIGHT CAMERA COORDINATE SYSTEM ACCORDING TO EQUATION (10)

S506 — TRANSFORMING $V_{CAM}{}^{R}$ INTO $V^{R}{}_{CAR}$ IN VEHICLE COORDINATE SYSTEM ACCORDING TO EQUATION (11)

S507 — TRANSFORMING $V^{R}{}_{CAR}$ INTO $V_{CAM}{}^{RM}$ IN RIGHT IDEAL CAMERA COORDINATE SYSTEM ACCORDING TO EQUATION (12)

S508 — SPECIFYING PIXEL COORDINATE $(x, y)^{RM}$ ON RIGHT IDEAL CAMERA IMAGE CORRESPONDING TO INCIDENT LIGHT VECTOR $V_{CAM}{}^{RM}$ ACCORDING TO EQUATION (13)

S509 — WRITING PIXEL VALUE OF SPECIFIED PIXEL COORDINATE $(x, y)^{RM}$ INTO PIXEL COORDINATE $(x, y)^{R}$ OF OBJECT TO BE PROCESSED

B

S510 — ARE ALL PIXELS PROCESSED?

NO → (back to S504)

YES ↓

S511 — STORING GENERATED MASK IMAGE OF REFERENCE VEHICLE BODY

END

B

## FIG.25

VEHICLE SHAPE DATA
(POLYGON MODEL)

MASK IMAGES OF VEHICLE
BODY OF INDIVIDUAL MASS-
PRODUCED VEHICLES

IMAGE COORDINATE
VALUE $(x, y)^R$

$(T_x^R, T_y^R, T_z^R)$

$C^P$

$\nu^R_{CAR}$

$\nu^R_{CAR}$

$P^{-1}_{CAR \rightarrow CAM}{}^R$

$\nu_{CAM}{}^R$

$T_R^{-1}$

EP 2 860 691 A2

## FIG.26

```
GENERATING PROCESS OF MASK
IMAGE OF REFERENCE VEHICLE BODY
```

S601 — CALCULATING TRANSFORMATION MATRIX $P^{-1}{}_{CAR \rightarrow CAM}{}^{R}$

S602 — CLEARING VEHICLE BODY MASK IMAGE BUFFER

S603 — EXTRACTING UNPROCESSED PIXEL COORDINATE $(x, y)^{R}$

S604 — TRANSFORMING INTO INCIDENT LIGHT VECTOR $V_{CAM}{}^{R}$ IN RIGHT CAMERA COORDINATE SYSTEM ACCORDING TO EQUATION (10)

S605 — TRANSFORMING $V_{CAM}{}^{R}$ INTO $V^{R}{}_{CAR}$ IN VEHICLE COORDINATE SYSTEM ACCORDING TO EQUATION (11)

S606 — CALCULATING INTERSECTION $C^{P}$ WITH POLYGON MODEL

S607 — IS INTERSECTION $C^{P}$ PRESENT?

NO → S609 — WRITING PIXEL VALUE 1 INTO PIXEL COORDINATE $(x, y)^{R}$ OF OBJECT TO BE PROCESSED

YES → S608 — WRITING PIXEL VALUE 0 INTO PIXEL COORDINATE $(x, y)^{R}$ OF OBJECT TO BE PROCESSED

S610 — ARE ALL PIXELS PROCESSED?

NO → (back)

YES → S611 — STORING GENERATED MASK IMAGE OF REFERENCE VEHICLE BODY

END

FIG.27

EP 2 860 691 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003196645 A